(19) Europäisches Patentamt
European Patent Office
Office européen des brevets

(11) EP 3 733 795 A1

(12) EUROPEAN PATENT APPLICATION
published in accordance with Art. 153(4) EPC

(43) Date of publication:
04.11.2020 Bulletin 2020/45

(21) Application number: 18896153.6

(22) Date of filing: 28.12.2018

(51) Int Cl.:
*C09D 17/00* (2006.01) *B41M 5/00* (2006.01)
*C09B 67/46* (2006.01) *C09D 11/326* (2014.01)

(86) International application number:
PCT/JP2018/048535

(87) International publication number:
WO 2019/132023 (04.07.2019 Gazette 2019/27)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 28.12.2017 JP 2017254830

(71) Applicant: Kao Corporation
Chuo-ku,
Tokyo 103-8210 (JP)

(72) Inventor: KAWAGUCHI, Hiroki
Wakayama-shi, Wakayama 640-8580 (JP)

(74) Representative: Hoffmann Eitle
Patent- und Rechtsanwälte PartmbB
Arabellastraße 30
81925 München (DE)

# (54) AQUEOUS PIGMENT DISPERSION

(57) The present invention relates to [1] a water-based pigment dispersion formed by dispersing a pigment in a water-based medium with a polymer dispersant, in which the dispersant contains an acid group-containing (meth)acrylic resin (A) and a polyurethane resin (B); the resin (A) is crosslinked with a crosslinking agent (C), and a crosslinking degree of the resin (A) is from 0.12 to 0.65; and a mass ratio of the pigment [pigment/whole solid components of water-based pigment dispersion] is from 0.25 to 0.75, and [2] a process for producing a water-based pigment dispersion, including step 1 of subjecting a pigment mixture containing a pigment, an acid group-containing (meth)acrylic resin (A) and a polyurethane resin (B) to dispersion treatment to obtain a dispersion; and step 2 of subjecting the dispersion obtained in the step 1 to crosslinking treatment with a crosslinking agent (C).

EP 3 733 795 A1

## Description

FIELD OF THE INVENTION

The present invention relates to a water-based pigment dispersion, a water-based ink containing the water-based pigment dispersion, and a process for producing the water-based pigment dispersion.

BACKGROUND OF THE INVENTION

In the commercial or industrial printing application fields including printing for packaging of goods or label printing used for advertisements, etc., a solvent-based ink or a UV-curing ink, etc., have been conventionally used to print characters or images on a printing medium formed of a resin such as PET (polyethylene terephthalate), PVC (polyvinyl chloride), PE (polyethylene), PP (polypropylene), NY (nylon) and the like. On the other hand, from the standpoints of reducing burdens on environments, saving energy, ensuring safety, etc., it has been required that an ink-jet printing method, a flexographic printing method or a gravure printing method is utilized as a printing method using water-based inks.

In addition, from the viewpoint of improving weathering resistance or water resistance of the resulting printed material, the use of water-based inks containing a pigment as a colorant has become predominant. However, since the resin printing medium is non-water absorptive, and the water-based inks are hardly penetrated into the resin printing medium, pigment particles contained in the water-based inks tend to remain on a surface of the printing medium. For this reason, the conventional water-based inks tend to be insufficient in adhesion properties to the printing medium and rub fastness, and therefore various attempts for improving these properties have been made conventionally.

For example, JP 2004-131586A (Patent Literature 1) aims at obtaining an aqueous pigment dispersion that is capable of forming a colored film having both of good light fastness and rub fastness and can exhibit excellent storage stability, etc., and discloses an aqueous pigment dispersion containing a pigment, a (meth)acrylic acid ester resin and a polyurethane resin in which the (meth)acrylic acid ester resin as a resin component has a larger non-volatile content, and an average dispersed particle size of the polyurethane resin lies within a specific range, etc.

JP 2013-53200A (Patent Literature 2) aims at providing a pigment aqueous dispersion composition that is capable of exhibiting excellent dispersibility, etc., and an aqueous ink composition that is capable of forming a coating film having not only excellent image density, etc., but also excellent gloss, and discloses a pigment aqueous dispersion composition containing a specific aqueous polyurethane dispersed resin, a pigment and a dispersant, etc.

JP 2005-48016A (Patent Literature 3) aims at providing a pigment dispersion liquid that is excellent in gloss, and has good storage stability, etc., when used as an ink composition, and discloses a pigment dispersion liquid that contains at least a pigment, an aqueous medium, a copolymer resin formed of a hydrophobic monomer and a hydrophilic monomer, a urethane resin and a crosslinking agent, in which a weight ratio of the crosslinking agent added, to active solid ingredients in the pigment dispersion liquid [amount of crosslinking agent/(total amount of copolymer resin formed of hydrophobic monomer and hydrophilic monomer, and urethane resin)] falls within a specific range, etc.

WO 2009/066577A (Patent Literature 4) aims at providing an aqueous pigment dispersion capable of preparing an aqueous pigment ink for ink-jet printing which can form colored images that have excellent rub fastness, and are excellent not only in color development on plain papers, but also in gloss on special papers, and discloses an aqueous pigment dispersion that contains carbon black or an organic pigment, a (meth)acrylic copolymer, a specific polyoxyethylene/polyoxypropylene block copolymer, a polyether-based polyurethane, a basic substance and water, etc.

SUMMARY OF THE INVENTION

The present invention relates to a water-based pigment dispersion formed by dispersing a pigment in a water-based medium with a polymer dispersant, in which:

the polymer dispersant contains an acid group-containing (meth)acrylic resin (A) and a polyurethane resin (B);
the (meth)acrylic resin (A) is crosslinked with a crosslinking agent (C), and a crosslinking degree of the (meth)acrylic resin (A) which is defined by a ratio of a mole equivalent number of crosslinkable functional groups of the crosslinking agent (C) to a mole equivalent number of acid groups of the (meth)acrylic resin (A) [(mole equivalent number of crosslinkable functional groups of crosslinking agent (C))/(mole equivalent number of acid groups of (meth)acrylic resin (A))] is not less than 0.12 and not more than 0.65; and
a mass ratio of the pigment to whole solid components of the water-based pigment dispersion [pigment/(whole solid components of water-based pigment dispersion)] is not less than 0.25 and not more than 0.75.

DETAILED DESCRIPTION OF THE INVENTION

As a method of improving adhesion properties of an ink to a printing medium, there is known the method of compounding a polymer emulsion as a fixing agent into the ink. However, it has been found that if a water-based ink containing a large amount of the polymer emulsion is used for printing on a non-water absorbing printing medium, there is such a tendency that the ink is deteriorated in storage stability or optical density.

In the technology described in the Patent Literature 1, although the ink obtained therein is improved in adhesion properties to a non-water absorbing printing medium to some extent, it is not possible to ensure high optical density of the ink. In the technology described in the Patent Literature 2, although the ink obtained therein is improved in optical density when printed on a plain paper, the ink tends to fail to satisfy both of good adhesion properties to a non-water absorbing printing medium and high optical density. In the technology described in the Patent Literature 3, although the ink composition obtained therein is improved in storage stability, the ink composition tends to be insufficient in adhesion properties to a non-water absorbing printing medium and optical density. In the technology described in the Patent Literature 4, although the ink obtained therein is improved in color develop ability when printed on a plain paper and rub fastness when printed on a photographic paper, the ink tends to fail to satisfy both of adhesion properties to a non-water absorbing printing medium and optical density. Thus, the conventional inks have failed to meet the recently increasing requirements, i.e., have failed to exhibit improved storage stability and satisfy both of excellent adhesion properties to a non-water absorbing printing medium and high optical density.

The present invention relates to a water-based pigment dispersion that is excellent in storage stability, and is capable of exhibiting high optical density while maintaining excellent adhesion properties to a non-water absorbing printing medium when used in a water-based ink, and a process for producing the water-based pigment dispersion.

When adding a polymer emulsion to a water-based ink to improve adhesion properties of the water-based ink, it is possible to strengthen a binding force between pigment particles or a bonding force of the pigment particles to a printing medium. On the other hand, the addition of the polymer emulsion to the water-based ink tends to cause deterioration in storage stability, and furthermore after contacting droplets of the ink with the printing medium, phase separation between a dispersant for the pigment and the polymer of the emulsion tends to occur, so that the pigment particles tend to suffer from local flocculation therebetween, and the surface of a coating film of the ink tends to be deteriorated in smoothness, thereby causing deterioration in optical density of the ink.

Under these circumstances, the present inventor has aimed at obtaining the ink having good performance that is capable of maintaining excellent storage stability, on one hand, and also capable of ensuring a strong bonding force between the pigment particles and the printing medium without suffering from local flocculation of the pigment particles under such an environmental condition that an ink vehicle is dried on the surface of the printing medium as is upon printing, on the other hand. Concretely, the present inventor has found that by using a water-based ink having excellent storage stability in which a pigment is dispersed with a polymer dispersant containing two different kinds of resins at least one of which is formed of a crosslinked polymer, and a content of the pigment in the ink is controlled to a specific range, it is possible to improve adhesion properties of the ink to a non-water absorbing printing medium as well as optical density of the ink.

That is, the present invention relates to the following aspects [1] to [4].

[1] A water-based pigment dispersion formed by dispersing a pigment in a water-based medium with a polymer dispersant, in which:

the polymer dispersant contains an acid group-containing (meth)acrylic resin (A) and a polyurethane resin (B);
the (meth)acrylic resin (A) is crosslinked with a crosslinking agent (C), and a crosslinking degree of the (meth)acrylic resin (A) which is defined by a ratio of a mole equivalent number of crosslinkable functional groups of the crosslinking agent (C) to a mole equivalent number of acid groups of the (meth)acrylic resin (A) [(mole equivalent number of crosslinkable functional groups of crosslinking agent (C))/(mole equivalent number of acid groups of (meth)acrylic resin (A))] is not less than 0.12 and not more than 0.65; and
a mass ratio of the pigment to whole solid components of the water-based pigment dispersion [pigment/(whole solid components of water-based pigment dispersion)] is not less than 0.25 and not more than 0.75.

[2] A process for producing a water-based pigment dispersion, including the following steps 1 and 2:

Step 1: subjecting a pigment mixture containing a pigment, an acid group-containing (meth)acrylic resin (A) and a polyurethane resin (B) to dispersion treatment to obtain a dispersion; and
Step 2: subjecting the dispersion obtained in the step 1 to crosslinking treatment with a crosslinking agent (C).

[3] A water-based ink containing the water-based pigment dispersion according to the above aspect [1].

[4] A use of the water-based ink according to the above aspect [3] for ink-jet printing.

In accordance with the present invention, it is possible to provide a water-based pigment dispersion that is excellent in storage stability, and is capable of exhibiting high optical density while maintaining excellent adhesion properties to a non-water absorbing printing medium when used in a water-based ink, a water-based ink containing the water-based pigment dispersion, and a process for producing the water-based pigment dispersion.

[Water-Based Pigment Dispersion]

The water-based pigment dispersion of the present invention is such a water-based pigment dispersion formed by dispersing a pigment in a water-based medium with a polymer dispersant, in which the polymer dispersant contains an acid group-containing (meth)acrylic resin (A) and a polyurethane resin (B); the (meth) acrylic resin (A) is crosslinked with a crosslinking agent (C), and a crosslinking degree of the (meth)acrylic resin (A) which is defined by a ratio of a mole equivalent number of crosslinkable functional groups of the crosslinking agent (C) to a mole equivalent number of acid groups of the (meth)acrylic resin (A) [(mole equivalent number of crosslinkable functional groups of crosslinking agent (C))/(mole equivalent number of acid groups of (meth)acrylic resin (A))] is not less than 0.12 and not more than 0.65; and a mass ratio of the pigment to whole solid components of the water-based pigment dispersion [pigment/(whole solid components of water-based pigment dispersion)] is not less than 0.25 and not more than 0.75.

Meanwhile, the term "water-based medium" as used herein means a medium in which water has a largest content among components of the medium for dispersing the pigment.

The water-based pigment dispersion of the present invention is excellent in storage stability, and is also capable of providing a good printed material that exhibits excellent adhesion properties and high optical density, and therefore can be suitably used as a water-based pigment dispersion for an ink for flexographic printing, an ink for gravure printing or an ink for ink-jet printing. In particular, the water-based pigment dispersion of the present invention is preferably used as a water-based pigment dispersion for an ink for ink-jet printing.

The water-based pigment dispersion of the present invention is excellent in storage stability, and can be improved in both of adhesion properties to a non-water absorbing printing medium and optical density when used in a water-based ink. The reason why the aforementioned advantageous effects can be attained by the present invention is considered as follows, though it is not clearly determined yet.

That is, it is estimated that in the water-based pigment dispersion of the present invention, the pigment is dispersed in the water-based medium under such a condition that the polymer dispersant is adsorbed or fixed onto the surface of the pigment. In addition, since the polymer dispersant contains the acid group-containing (meth)acrylic resin and the polyurethane resin, and the (meth)acrylic resin is crosslinked with the crosslinking agent such that a crosslinking degree of the (meth)acrylic resin lies within the specific range, it is considered that the (meth)acrylic resin is adsorbed or fixed together with the polyurethane resin onto the surface of the pigment, so that the pigment can be stably dispersed, and the polyurethane resin is capable of improving adhesion properties of the resulting ink to a non-water absorbing printing medium. Moreover, since the mass ratio of the pigment to whole solid components of the water-based pigment dispersion lies within the specific range, and the pigment is dispersed with the polymer dispersant containing the (meth)acrylic resin and the polyurethane resin so as to adsorb or fix the two kinds of resins onto the surface of the pigment, it is estimated that the resins hardly suffer from phase separation upon formation of a coating film of the ink vehicle and drying thereof, and the resulting coating film has a smooth surface, so that the resulting printed characters or images can be improved in optical density.

<Pigment>

The pigment used in the present invention may be either an inorganic pigment or an organic pigment, and may also be used in the form of a lake pigment or a fluorescent pigment. In addition, the pigment may also be used in combination with an extender pigment, if required.

Specific examples of the inorganic pigment include carbon blacks, metal oxides such as titanium oxide, iron oxide, red iron oxide, chromium oxide, etc., pearlescent pigments, and the like. In particular, the carbon blacks are preferably used for black inks. Examples of the carbon blacks include furnace blacks, thermal lamp blacks, acetylene blacks, channel blacks and the like.

Specific examples of the organic pigment include azo pigments such as azo lake pigments, insoluble monoazo pigments, insoluble disazo pigments, chelate azo pigments, etc.; polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, threne pigments, etc.; and the like.

The hue of the pigment is not particularly limited, and there may be used any of achromatic color pigments

having a white color, a black color, a gray color, etc.; and chromatic color pigments having a yellow color, a magenta color, a cyan color, a blue color, a red color, an orange color, a green color, etc.

Examples of the extender pigment include silica, calcium carbonate, talc and the like.

The aforementioned pigments may be used alone or in the form of a mixture of any two or more thereof.

In the present invention, the pigment is included in the water-based pigment dispersion in the form of a pigment that is dispersed with the polymer dispersant, or in the form of a pigment-containing polymer dispersant, i.e., polymer particles containing a pigment (hereinafter also referred to merely as "pigment-containing polymer particles").

From the viewpoint of improving storage stability of the water-based pigment dispersion as well as adhesion properties and optical density of the water-based ink, the pigment is preferably included in the water-based pigment dispersion in the form of the pigment-containing polymer particles.

<Polymer dispersant>

The polymer dispersant used in the present invention contains the (meth)acrylic resin (A) and the polyurethane resin (B).

The mass ratio of the polyurethane resin (B) to the (meth)acrylic resin (A) [polyurethane resin (B)/(meth)acrylic resin (A)] in the water-based pigment dispersion is preferably not less than 0.15, more preferably not less than 0.5, even more preferably not less than 1, further even more preferably not less than 1.5 and still further even more preferably not less than 2, and is also preferably not more than 15, more preferably not more than 10, even more preferably not more than 7 and further even more preferably not more than 5.

Examples of the configuration of the polymer dispersant that is present in the water-based pigment dispersion include the configuration in which the polymer dispersant is adsorbed onto the pigment, the pigment-enclosing (encapsulating) configuration in which the pigment is incorporated in the polymer dispersant, and the configuration in which the polymer dispersant is not adsorbed onto the pigment. In the present invention, from the viewpoint of improving dispersion stability of the pigment, among these configurations, preferred is the configuration in which the pigment is incorporated in the polymer dispersant, i.e., the configuration of the pigment-containing polymer particles, and more preferred is the pigment-enclosing configuration in which the pigment is enclosed in the polymer dispersant.

[(Meth)acrylic Resin (A)]

From the viewpoint of improving dispersion stability of the pigment, it is preferred that the (meth)acrylic resin (A) used in the present invention contains acid groups, and the acid groups are at least partially neutralized with a neutralizing agent. By using the aforementioned (meth)acrylic resin (A), it is considered that since the charge repulsion force between the pigment particles which is exhibited after the neutralization becomes large, it is possible to suppress flocculation of the pigment particles in the water-based pigment dispersion and inhibit increase in viscosity of the dispersion, so that the resulting dispersion is improved in storage stability.

Examples of the acid groups include groups that are capable of releasing hydrogen ions upon dissociation thereof to allow the resin to exhibit acidity, such as a carboxy group ($-COOM^1$), a sulfonic acid group ($-SO_3M^1$), a phosphoric acid group ($-OPO_3M^1{}_2$), etc., or dissociated ion forms of these groups (such as $-COO^-$, $-SO_3$, $-OPO_3{}^2$ and $-OPO_3{}^-M^1$), and the like. In the aforementioned chemical formulae, $M^1$ is a hydrogen atom, an alkali metal, ammonium or an organic ammonium. Of these groups, from the viewpoint of improving storage stability of the water-based pigment dispersion as well as adhesion properties and optical density of the water-based ink, preferred is a carboxy group ($-COOM^1$).

The acid value of the (meth) acrylic resin (A) is preferably not less than 50 mgKOH/g and more preferably not less than 70 mgKOH/g, and is also preferably not more than 300 mgKOH/g, more preferably not more than 270 mgKOH/g and even more preferably not more than 250 mgKOH/g. When the acid value of the (meth)acrylic resin (A) lies within the aforementioned range, the amounts of the acid groups and the neutralized acid groups in the (meth)acrylic resin (A) are sufficient, and it is therefore possible to ensure good dispersion stability of the pigment in the resulting dispersion. In addition, the acid value of the (meth)acrylic resin (A) which lies within the aforementioned range is also preferred from the viewpoint of attaining good balance between affinity of the polymer dispersant to the water-based medium and interaction of the polymer dispersant with the pigment.

The acid value of the (meth)acrylic resin (A) may be calculated from a mass ratio between the monomers constituting the (meth)acrylic resin (A). In addition, the acid value of the (meth)acrylic resin (A) may also be determined by the method in which the (meth)acrylic resin (A) is dissolved in or swelled with an adequate organic solvent (e.g., methyl ethyl ketone (MEK)) and then the resulting solution or swelled product is subjected to titration.

The (meth)acrylic resin (A) used in the present invention is preferably in the form of a vinyl-based polymer that is produced by copolymerizing a monomer mixture A containing (a-1) a carboxy group-containing monomer (hereinafter also referred to merely as a "component (a-1)") and (a-2) a hydrophobic monomer (hereinafter also referred to merely

as a "component (a-2)") (the aforementioned mixture hereinafter also referred to merely as a "monomer mixture A"). The vinyl-based polymer contains a constitutional unit derived from the component (a-1) and a constitutional unit derived from the component (a-2). The vinyl-based polymer may further contain a constitutional unit derived from (a-3) a macromonomer (hereinafter also referred to merely as a "component (a-3)") and/or a constitutional unit derived from (a-4) a nonionic monomer (hereinafter also referred to merely as a "component (a-4)").

[(a-1) Carboxy Group-Containing Monomer]

The carboxy group-containing monomer (a-1) is preferably used as a monomer component of the (meth)acrylic resin (A) from the viewpoint of improving dispersion stability of the pigment. As the carboxy group-containing monomer (a-1), there may be used carboxylic acid monomers.

Specific examples of the carboxylic acid monomers include (meth)acrylic acid, crotonic acid, itaconic acid, maleic acid, fumaric acid, citraconic acid, 2-methacryloyloxymethylsuccinic acid and the like. Among these carboxylic acid monomers, preferred is (meth)acrylic acid.

The term "(meth)acrylic acid" as used in the present specification means at least one compound selected from the group consisting of acrylic acid and methacrylic acid.

[(a-2) Hydrophobic Monomer]

The hydrophobic monomer (a-2) is preferably used as a monomer component of the (meth)acrylic resin (A) from the viewpoint of improving adsorption of the polymer dispersant onto the pigment to thereby improve dispersion stability of the pigment.

The term "hydrophobic" as used in the present specification means that a solubility in water of the monomer as measured by dissolving the monomer in 100 g of ion-exchanged water at 25°C until reaching a saturation concentration thereof is less than 10 g. The solubility in water of the hydrophobic monomer (a-2) is preferably not more than 5 g and more preferably not more than 1 g from the viewpoint of improving adsorption of the polymer dispersant onto the pigment.

The hydrophobic monomer (a-2) is preferably at least one monomer selected from the group consisting of a (meth)acrylate containing a hydrocarbon group derived from an aliphatic alcohol, and an aromatic group-containing monomer.

The term "(meth)acrylate" as used in the present specification means at least one compound selected from the group consisting of an acrylate and a methacrylate.

As the (meth)acrylate containing a hydrocarbon group derived from an aliphatic alcohol, preferred are those (meth)acrylates containing a hydrocarbon group derived from an aliphatic alcohol having not less than 1 and not more than 22 carbon atoms. Examples of the (meth)acrylates containing a hydrocarbon group derived from an aliphatic alcohol having not less than 1 and not more than 22 carbon atoms include (meth)acrylates containing a linear alkyl group, such as methyl (meth)acrylate, ethyl (meth)acrylate, propyl (meth)acrylate, butyl (meth)acrylate, pentyl (meth)acrylate, octyl (meth)acrylate, decyl (meth)acrylate, dodecyl (meth)acrylate, stearyl (meth)acrylate, etc.; (meth)acrylates containing a branched alkyl group, such as isopropyl (meth)acrylate, isobutyl (meth)acrylate, *tert*-butyl (meth)acrylate, isopentyl (meth)acrylate, isooctyl (meth)acrylate, isodecyl (meth)acrylate, isododecyl (meth)acrylate, isostearyl (meth)acrylate, 2-ethylhexyl (meth)acrylate, etc.; (meth)acrylates containing an alicyclic alkyl group, such as cyclohexyl (meth)acrylate, etc.; and the like. Of these (meth)acrylates, more preferred are those (meth)acrylates containing an alkyl group having not less than 1 and not more than 10 carbon atoms, and even more preferred are those (meth)acrylates containing an alkyl group having not less than 1 and not more than 8 carbon atoms.

The aromatic group-containing monomer is preferably a vinyl monomer containing an aromatic group having not less than 6 and not more than 22 carbon atoms which may contain a substituent group containing a hetero atom, and more preferably a styrene-based monomer or an aromatic group-containing (meth)acrylate. The molecular weight of the aromatic group-containing monomer is preferably less than 500.

As the styrene-based monomer, preferred are styrene, $\alpha$-methyl styrene, 2-methyl styrene, vinyl toluene and divinyl benzene, and more preferred are styrene and $\alpha$-methyl styrene.

In addition, as the aromatic group-containing (meth)acrylate, preferred are phenyl (meth)acrylate, benzyl (meth)acrylate, phenoxyethyl (meth)acrylate, etc., and more preferred is benzyl (meth)acrylate.

As the hydrophobic monomer (a-2), there may be used two or more monomers selected from the aforementioned monomers, and the styrene-based monomer may be used in combination with the aromatic group-containing (meth)acrylate.

[(a-3) Macromonomer]

The macromonomer (a-3) is in the form of a compound containing a polymerizable functional group at one

terminal end thereof and having a number-average molecular weight of not less than 500 and not more than 100,000, and may be used as a monomer component of the (meth)acrylic resin (A) from the viewpoint of improving dispersion stability of the pigment. The polymerizable functional group bonded to one terminal end of the macromonomer is preferably an acryloyloxy group or a methacryloyloxy group, and more preferably a methacryloyloxy group.

The macromonomer (a-3) preferably has a number-average molecular weight of not less than 1,000 and not more than 10,000. Meanwhile, the number-average molecular weight may be measured by gel permeation chromatography using chloroform containing 1 mmol/L of dodecyl dimethylamine as a solvent and using polystyrenes as a reference standard substance.

As the macromonomer (a-3), from the viewpoint of improving dispersion stability of the pigment, preferred are an aromatic group-containing monomer-based macromonomer and a silicone-based macromonomer, and more preferred is an aromatic group-containing monomer-based macromonomer.

As an aromatic group-containing monomer constituting the aromatic group-containing monomer-based macromonomer, there may be mentioned the same aromatic group-containing monomers as described previously as to the aforementioned hydrophobic monomer (a-2). Among these aromatic group-containing monomers, preferred are styrene and benzyl (meth)acrylate, and more preferred is styrene.

Specific examples of commercially available products of the styrene-based macromonomer include "AS-6(S)", "AN-6(S)" and "HS-6(S)" (tradenames) all available from Toagosei Co., Ltd., and the like.

Examples of the silicone-based macromonomer include organopolysiloxanes containing a polymerizable functional group at one terminal end thereof, and the like.

[(a-4) Nonionic Monomer]

From the viewpoint of improving dispersion stability of the pigment, the nonionic monomer (a-4) may be used as a monomer component of the (meth)acrylic resin (A).

Examples of the nonionic monomer (a-4) include hydroxyalkyl (meth)acrylates such as 2-hydroxyethyl (meth)acrylate, 3-hydroxypropyl (meth)acrylate, etc.; polyalkylene glycol (meth)acrylates such as polypropylene glycol (n = 2 to 30 wherein n represents an average molar number of addition of oxypropylene groups: hereinafter n also represents such an average molar number of addition of oxyalkylene groups) (meth)acrylate, polyethylene glycol (n = 2 to 30) (meth) acrylate, etc.; alkoxy polyalkylene glycol (meth)acrylates such as methoxy polyethylene glycol (n = 1 to 30) (meth)acrylate, etc.; phenoxy (ethylene glycol/propylene glycol copolymer) (n = 1 to 30 in which n for ethylene glycol: n = 1 to 29) (meth)acrylate; and the like. Among these nonionic monomers, preferred are polypropylene glycol (n = 2 to 30) (meth)acrylate and phenoxy (ethylene glycol/propylene glycol copolymer) (meth)acrylate; and more preferred is polypropylene glycol (n = 2 to 30) (meth)acrylate.

Specific examples of commercially available products of the component (a-4) include "NK ESTER M-20G", "NK ESTER M-40G", "NK ESTER M-90G", "NK ESTER M-230G" and the like as products available from Shin-Nakamura Chemical Co., Ltd.; and "BLEMMER PE-90", "BLEMMER PE-200", "BLEMMER PE-350" and the like, "BLEMMER PME-100", "BLEMMER PME-200", "BLEMMER PME-400" and the like, "BLEMMER PP-500", "BLEMMER PP-800", "BLEMMER PP-1000" and the like, "BLEMMER AP-150", "BLEMMER AP-400", "BLEMMER AP-550" and the like, and "BLEMMER 50PEP-300", "BLEMMER 50POEP-800B", "BLEMMER 43PAPE-600B" and the like as products available from NOF Corporation.

The aforementioned components (a-1) to (a-4) may be respectively used alone or in the form of a mixture of any two or more thereof.

As described above, the (meth)acrylic resin (A) used in the present invention is preferably a vinyl-based polymer containing a constitutional unit derived from at least one carboxy group-containing monomer (a-1) selected from the group consisting of acrylic acid and methacrylic acid, and a constitutional unit derived from at least one hydrophobic monomer (a-2) selected from the group consisting of a (meth)acrylate containing a hydrocarbon group derived from an aliphatic alcohol and an aromatic group-containing monomer, and may also be a vinyl-based polymer further containing a constitutional unit derived from the macromonomer (a-3), and a constitutional unit derived from the nonionic monomer (a-4) in addition to the aforementioned constitutional units derived from the components (a-1) and (a-2).

(Contents of Respective Components in Monomer Mixture A or Contents of Respective Constitutional Units in (Meth)acrylic Resin (A))

The contents of the aforementioned components (a-1) and (a-2) in the monomer mixture A (contents of non-neutralized components; hereinafter defined in the same way) upon production of the (meth)acrylic resin (A), or the contents of the constitutional units derived from the components (a-1) and (a-2) in the (meth)acrylic resin (A) are as follows, from the viewpoint of improving dispersion stability of the pigment.

The content of the component (a-1) is preferably not less than 10% by mass, more preferably not less than

20% by mass and even more preferably not less than 25% by mass, and is also preferably not more than 75% by mass, more preferably not more than 60% by mass and even more preferably not more than 50% by mass.

The content of the component (a-2) is preferably not less than 25% by mass, more preferably not less than 40% by mass and even more preferably not less than 50% by mass, and is also preferably not more than 90% by mass, more preferably not more than 80% by mass and even more preferably not more than 75% by mass.

In the case of further including the constitutional units derived from the component (a-3) and/or the component (a-4), the contents of the aforementioned components (a-1) to (a-4) in the monomer mixture A upon production of the (meth)acrylic resin (A), or the contents of the constitutional units derived from the components (a-1) to (a-4) in the (meth)acrylic resin (A) are as follows, from the viewpoint of improving dispersion stability of the pigment.

The content of the component (a-1) is preferably not less than 3% by mass, more preferably not less than 5% by mass and even more preferably not less than 7% by mass, and is also preferably not more than 30% by mass, more preferably not more than 28% by mass and even more preferably not more than 25% by mass.

The content of the component (a-2) is preferably not less than 25% by mass, more preferably not less than 30% by mass and even more preferably not less than 35% by mass, and is also preferably not more than 65% by mass, more preferably not more than 60% by mass and even more preferably not more than 55% by mass.

In the case of including the component (a-3), the content of the component (a-3) is preferably not less than 3% by mass, more preferably not less than 5% by mass and even more preferably not less than 8% by mass, and is also preferably not more than 30% by mass, more preferably not more than 25% by mass and even more preferably not more than 20% by mass.

In the case of including the component (a-4), the content of the component (a-4) is preferably not less than 5% by mass, more preferably not less than 10% by mass and even more preferably not less than 15% by mass, and is also preferably not more than 40% by mass, more preferably not more than 35% by mass and even more preferably not more than 30% by mass.

The mass ratio of the component (a-1) to the component (a-2) [component (a-1)/component (a-2)] is preferably not less than 0.1, more preferably not less than 0.15 and even more preferably not less than 0.25, and is also preferably not more than 3, more preferably not more than 2, even more preferably not more than 1 and further even more preferably not more than 0.5.

Also, in the case of including the component (a-3), the mass ratio of the component (a-1) to a sum of the component (a-2) and the component (a-3) [component (a-1)/[component (a-2) + component (a-3)]] is preferably not less than 0.03, more preferably not less than 0.05 and even more preferably not less than 0.1, and is also preferably not more than 1, more preferably not more than 0.8, even more preferably not more than 0.6 and further even more preferably not more than 0.5.

(Production of (Meth)acrylic Resin (A))

The (meth)acrylic resin (A) may be produced by copolymerizing the aforementioned monomer mixture A by conventionally known polymerization methods such as a bulk polymerization method, a solution polymerization method, a suspension polymerization method, an emulsion polymerization method, etc. Among these polymerization methods, preferred is the solution polymerization method.

The solvent used in the solution polymerization method is not particularly limited, and is preferably an organic polar solvent. If the organic polar solvent is miscible with water, the organic polar solvent may be used in the form of a mixture with water. Examples of the organic polar solvent include aliphatic alcohols having not less than 1 and not more than 3 carbon atoms; ketones having not less than 3 and not more than 5 carbon atoms; ethers; esters such as ethyl acetate, etc.; and the like. Among these organic polar solvents, preferred is methanol, ethanol, acetone, methyl ethyl ketone or a mixed solvent of at least one of these compounds with water, and more preferred is methyl ethyl ketone or a mixed solvent of methyl ethyl ketone and water.

The polymerization may be carried out in the presence of a polymerization initiator or a polymerization chain transfer agent.

Examples of the polymerization initiator include conventionally known radical polymerization initiators, e.g., azo compounds such as 2,2'-azobisisobutyronitrile, 2,2'-azobis(2,4-dimethylvaleronitrile), etc., organic peroxides such as *t*-butyl peroxyoctoate, benzoyl peroxide, etc.; and the like. The amount of the radical polymerization initiator used in the polymerization is preferably not less than 0.001 mol and not more than 5 mol, and more preferably not less than 0.01 mol and not more than 2 mol, per 1 mol of the monomer mixture A.

Examples of the polymerization chain transfer agent include conventionally known polymerization chain transfer agents, e.g., mercaptans such as octyl mercaptan, 2-mercaptoethanol, etc., thiuram disulfides, and the like.

In addition, the type of a polymerization chain of the monomer polymerized is not particularly limited, and may be of any of a random type, a block type, a graft type, etc.

The preferred polymerization conditions may vary depending upon the kinds of polymerization initiators, monomers and solvents used, etc. In general, the polymerization temperature is preferably not lower than 30°C and more preferably not lower than 50°C, and is also preferably not higher than 95°C and more preferably not higher than 80°C. The polymerization time is preferably not less than 1 hour and more preferably not less than 2 hours, and is also preferably not more than 20 hours and more preferably not more than 10 hours. Furthermore, the polymerization is preferably conducted in a nitrogen gas atmosphere or an atmosphere of an inert gas such as argon, etc.

After completion of the polymerization reaction, the polymer produced may be isolated from the obtained reaction solution by known methods such as reprecipitation, removal of the solvent by distillation, etc. In addition, the resulting polymer may be purified by removing the unreacted monomers, etc., from the polymer by reprecipitation, membrane separation, chromatography, extraction, etc.

The number-average molecular weight of the (meth)acrylic resin (A) used in the present invention is preferably not less than 2,000, more preferably not less than 5,000 and even more preferably not less than 8,000, and is also preferably not more than 100,000, more preferably not more than 80,000 and even more preferably not more than 60,000. When the number-average molecular weight of the (meth)acrylic resin (A) lies within the aforementioned range, adsorption of the (meth)acrylic resin (A) to the pigment is sufficient, so that the pigment can exhibit good dispersion stability.

Meanwhile, the number-average molecular weight may be measured by the method described in Examples below.

[Polyurethane Resin (B)]

The polyurethane resin (B) used in the present invention may be produced by subjecting an organic compound containing two or more alcoholic hydroxy groups in a molecule thereof (polyol) and a polyisocyanate to polyaddition reaction.

(Polyol)

The polyol is not particularly limited as long as it contains two or more alcoholic hydroxy groups in a molecule thereof. As the polyol, preferred are a polycarbonate polyol, a polyester polyol and a polyether polyol, and more preferred are a polycarbonate polyol and a polyester polyol. More specifically, the polyurethane resin (B) is preferably in the form of a polycarbonate-based polyurethane or a polyester-based polyurethane.

The polycarbonate polyol may be produced by reacting a carbonate compound with a diol.

Examples of the carbonate compound include dimethyl carbonate, diethyl carbonate, diphenyl carbonate, ethylene carbonate, diethylene carbonate and the like.

Examples of the diol include an aliphatic diol that may be substituted with a lower alcohol; an alicyclic diol such as cyclohexanediol, a hydrogenated xylene glycol, etc.; and an aromatic diol such as xylylene glycol, etc. Among these diols, preferred is an aliphatic diol, and more preferred is an aliphatic diol having a carbon chain length of not less than 4 and not more than 9, such as 1,4-butanediol, 3-methyl-1,5-pentanediol, 1,6-hexanediol, heptanediol, octanediol, nonanediol, etc.

The polyester polyol may be produced by subjecting a low-molecular diol and a dicarboxylic acid to condensation reaction.

Examples of the low-molecular diol include diols having not less than 2 and not more than 6 carbon atoms, such as ethylene glycol, diethylene glycol, propylene glycol, dipropylene glycol, 1,4-butanediol, etc. Among these low-molecular diols, preferred are ethylene glycol, propylene glycol, 1,4-butanediol and the like.

Examples of the dicarboxylic acid include aliphatic dibasic acids such as succinic acid, glutaric acid, adipic acid, pimelic acid, suberic acid, azelaic acid, sebacic acid, brassylic acid, etc.; and aromatic dibasic acids such as isophthalic acid, terephthalic acid, naphthalenedicarboxylic acid, etc. Among these dicarboxylic acids, preferred are aliphatic dibasic acids, and more preferred are dibasic acids having a methylene chain length of not less than 4 and not more than 8, such as adipic acid, pimelic acid, suberic acid, azelaic acid, sebacic acid, etc.

Examples of the polyether polyol include polymers obtained by subjecting a cyclic ether compound such as ethyleneoxide, propyleneoxide, butyleneoxide, styreneoxide, tetrahydrofuran, epichlorohydrin, etc., alone or in the form of a mixture of any two or more thereof to ring opening polymerization reaction, etc., using an active hydrogen atom-containing compound as a catalyst, etc. Specific examples of the polyether polyol include polyethylene glycol, polypropylene glycol, polytetramethylene glycol, and the like.

(Polyisocyanate)

Examples of the polyisocyanate include a chain-like aliphatic diisocyanate such as tetramethylene diisocyanate, 1,6-hexamethylene diisocyanate, dodecamethylene diisocyanate, trimethyl hexamethylene diisocyanate, lysine diisocyanate, etc.; an aliphatic diisocyanate having a cyclic structure such as isophorone diisocyanate, a hydrogenated xylylene diisocyanate, dicyclohexylmethane 4,4'-diisocyanate. etc.; an aromatic ring-containing aliphatic diisocyanate such as xylylene diisocyanate, tetramethyl xylylene diisocyanate, etc.; an aromatic diisocyanate such as tolylene diisocyanate, diphenylmethane diisocyanate, etc.; and modified products of these diisocyanates (such as carbodiimide-, uretdione- and uretimine-containing modified products, etc.), and the like. Among these polyisocyanates, preferred are an aliphatic diisocyanate and an aromatic diisocyanate.

The polyurethane resin (B) preferably contains acid groups from the viewpoint of improving dispersion stability thereof in a water-based medium as well as from the viewpoint of improving storage stability of the water-based pigment dispersion as well as adhesion properties and optical density of the water-based ink. In this case, it is preferred that the (meth)acrylic resin (A) and the polyurethane resin (B) are crosslinked with the crosslinking agent (C), and it is more preferred that the acid groups contained in each of the acrylic resin (A) and the polyurethane resin (B) are partially crosslinked with the crosslinking agent (C). Moreover, the acid groups are preferably at least partially neutralized with a neutralizing agent. As a result, it is considered that a charge repulsion force between the pigment particles which is exhibited after the neutralization can be increased, and it is therefore possible to suppress flocculation of the pigment particles in the water-based pigment dispersion or the water-based ink as well as inhibit increase in viscosity thereof, so that the resulting water-based pigment dispersion or water-based ink can be improved in storage stability. Examples of the neutralizing agent include alkylamines such as butylamine, triethylamine, etc.; alkanolamines such as monoethanolamine, diethanolamine, triethanolamine, etc.; inorganic bases such as morpholine, ammonia, sodium hydroxide, etc.; and the like.

As the acid groups of the polyurethane resin (B), there may be mentioned the same acid groups as described above as to the acid groups of the (meth)acrylic resin (A). Among those acid groups, from the viewpoint of improving storage stability of the water-based pigment dispersion as well as adhesion properties and optical density of the water-based ink, preferred is a carboxy group ($-COOM^1$).

The carboxy group-containing polyurethane resin (B) may be produced by subjecting the polyol, the polyisocyanate and a dialkanol carboxylic acid to polyaddition reaction. Examples of the dialkanol carboxylic acid include dimethylol butanoic acid, dimethylol propionic acid and salts of these acids, and the like.

Examples of the reaction solvent used in the aforementioned polyaddition reaction include acetone, methyl ethyl ketone, tetrahydrofuran, dioxane, ethyl acetate, toluene, xylene and the like. In the aforementioned polyaddition reaction, a chain extender or a reaction terminator may also be used in combination with the aforementioned components, if required. By using the chain extender, it is possible to increase a molecular weight of the resulting resin. As the chain extender, there may be a polyol and a polyamine. Also, as the reaction terminator, there may be a monoalcohol and a monoamine.

The polyurethane resin (B) is preferably used in the form of an emulsion thereof. The emulsion of the polyurethane resin (B) may also contain a dispersant such as a surfactant, if required.

The acid value of the polyurethane resin (B) is preferably not less than 5 mgKOH/g, more preferably not less than 10 mgKOH/g and even more preferably not less than 20 mgKOH/g, and is also preferably not more than 50 mgKOH/g, more preferably not more than 40 mgKOH/g and even more preferably not more than 35 mgKOH/g, from the viewpoint of improving adhesion properties of the resulting water-based ink to a printing medium.

<Crosslinking Agent (C)>

In the present invention, from the viewpoint of improving storage stability of the water-based pigment dispersion as well as adhesion properties and optical density of the water-based ink, at least the (meth)acrylic resin is crosslinked with the crosslinking agent (C).

The crosslinking agent (C) used in the present invention preferably has a water solubility rate (mass ratio) of not more than 50%, more preferably not more than 40% and even more preferably not more than 35% from the viewpoint of efficiently conducting the reaction of the crosslinking agent (C) with the acid groups of the (meth)acrylic resin (A) in a medium containing water as a main component as well as from the viewpoint of improving storage stability of the water-based pigment dispersion as well as adhesion properties and optical density of the water-based ink. The "water solubility rate % (mass ratio)" as used herein means a rate (%) of dissolution of the crosslinking agent (C) as measured by dissolving 10 parts by mass of the crosslinking agent (C) in 90 parts by mass of water at room temperature (25°C).

The crosslinking agent (C) is preferably a compound containing two or more epoxy groups in a molecule thereof, more preferably a compound containing a glycidyl ether group, and even more preferably a polyglycidyl ether compound of a polyhydric alcohol containing a hydrocarbon group having not less than 3 and not more than 8 carbon atoms.

The molecular weight of the crosslinking agent (C) is preferably not less than 120, more preferably not less than 150 and even more preferably not less than 200, and is also preferably not more than 2000, more preferably not more than 1500 and even more preferably not more than 1000, from the viewpoint of facilitating the crosslinking reaction as well as from the viewpoint of improving storage stability of the resulting water-based pigment dispersion.

The epoxy equivalent of the crosslinking agent (C) is preferably not less than 90, more preferably not less than 100 and even more preferably not less than 110, and is also preferably not more than 300, more preferably not more than 200 and even more preferably not more than 150.

The number of epoxy groups contained in the crosslinking agent (C) is not less than 2 per a molecule thereof, and is also preferably not more than 6 per a molecule thereof, from the viewpoint of efficiently reacting the crosslinking agent with the acid groups to thereby improve storage stability of the resulting water-based pigment dispersion. The number of epoxy groups contained in the crosslinking agent (C) is also more preferably not more than 4 per a molecule thereof from the viewpoint of good availability in the market.

Specific examples of the crosslinking agent (C) include polyglycidyl ethers such as polypropylene glycol diglycidyl ether (water solubility rate: 31%), glycerol polyglycidyl ether, polyglycerol polyglycidyl ether, trimethylolpropane polyglycidyl ether (water solubility rate: 27%), sorbitol polyglycidyl ether, pentaerythritol polyglycidyl ether (water solubility rate: 0%), resorcinol diglycidyl ether, neopentyl glycol diglycidyl ether, 1,6-hexanediol diglycidyl ether, hydrogenated bisphenol A-type diglycidyl ethers, etc., and the like. Of these crosslinking agents, preferred is at least one compound selected from the group consisting of trimethylolpropane polyglycidyl ether and pentaerythritol polyglycidyl ether.

In the present invention, it is preferred that by partially neutralizing the acid groups contained in the (meth)acrylic resin (A) with the below-mentioned neutralizing agent and further partially crosslinking the acid groups contained in the (meth)acrylic resin (A) with the crosslinking agent (C) to form a crosslinked structure in the resin, the resulting water-based pigment dispersion is preferably in the form of such a dispersion in which the pigment is dispersed in the water-based medium with the polymer dispersant subjected to the crosslinking reaction (hereinafter also referred to merely as a "crosslinked polymer dispersant").

The crosslinking degree defined by the ratio of a mole equivalent number of the crosslinkable functional groups of the crosslinking agent (C) to a mole equivalent number of the acid groups of the (meth)acrylic resin (A) [(mole equivalent number of crosslinkable functional groups of crosslinking agent (C))/(mole equivalent number of acid groups of (meth)acrylic resin (A))] is not less than 0.12, preferably not less than 0.16 and more preferably not less than 0.2, and is also not more than 0.65, preferably not more than 0.6, more preferably not more than 0.5, even more preferably not more than 0.4 and further even more preferably not more than 0.3, from the viewpoint of improving storage stability of the water-based pigment dispersion as well as adhesion properties and optical density of the water-based ink.

The crosslinking degree used in the present invention is an apparent crosslinking degree calculated from an acid value of the (meth)acrylic resin (A) and an equivalent amount of the crosslinkable functional groups contained in the crosslinking agent (C).

In the case where the polyurethane resin (B) contains the acid groups, a crosslinked structure is also formed between the acid groups contained in the polyurethane resin (B) and the crosslinking agent (C). However, in the present invention, from the viewpoint of well controlling the crosslinking degree of the polymer dispersant as well as from the viewpoint of improving storage stability of the water-based pigment dispersion as well as adhesion properties and optical density of the water-based ink, the ratio of the mole equivalent number of the crosslinkable functional groups of the crosslinking agent (C) to the mole equivalent number of the acid groups of the (meth)acrylic resin (A) is used as an index of the crosslinking degree.

In the water-based pigment dispersion of the present invention, from the viewpoint of improving storage stability of the water-based pigment dispersion as well as adhesion properties and optical density of the water-based ink, it is more preferred that both of the (meth)acrylic resin (A) and the polyurethane resin (B) contain the acid groups, and the (meth)acrylic resin (A) and the polyurethane resin (B) are crosslinked with the crosslinking agent (C). It is considered that since the acid groups contained in each of the (meth)acrylic resin (A) and the polyurethane resin (B) constituting the polymer dispersant are partially crosslinked with the crosslinking agent (C) to form a crosslinked structure by the crosslinking reaction between molecular chains of the (meth)acrylic resin (A), between molecular chains of the polyurethane resin (B) and between the molecular chain of the (meth)acrylic resin (A) and the molecular chain of the polyurethane resin (B) via the crosslinking agent (C), the pigment can be improved in dispersion stability with the polymer dispersant, so that the water-based pigment dispersion can be improved in storage stability, and further the resulting water-based ink can be improved in adhesion properties and optical density.

The polymer dispersant used in the water-based pigment dispersion of the present invention preferably has three or more branched structures represented by the following formula (1) as a crosslinked structure thereof from the viewpoint of improving storage stability of the water-based pigment dispersion as well as adhesion properties and optical density of the water-based ink.

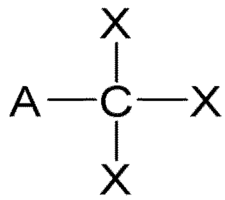

(1)

wherein X is a group represented by the following formula (2) or (3); and A is the group represented by X or an ethyl group.

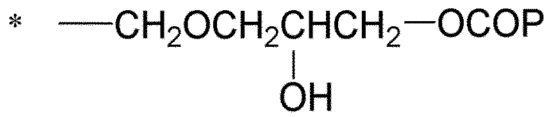

(2)

wherein P is a molecular chain of the (meth)acrylic resin (A) or a molecular chain of the polyurethane resin (B); and * indicates a bonding site to the quaternary carbon atom in the formula (1).

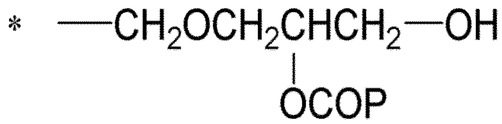

(3)

wherein P and * have the same meanings as described above.

The mass ratio of the pigment to whole solid components of the water-based pigment dispersion [pigment/(whole solid components of water-based pigment dispersion)] is not less than 0.25, preferably not less than 0.3, more preferably not less than 0.35 and even more preferably not less than 0.4, and is also not more than 0.75, preferably not more than 0.7, more preferably not more than 0.6 and even more preferably not more than 0.5, from the viewpoint of improving storage stability of the water-based pigment dispersion as well as adhesion properties and optical density of the water-based ink.

The mass ratio of the pigment to a sum of the pigment and the (meth)acrylic resin (A) [pigment/(pigment + (meth)acrylic resin (A))] in the water-based pigment dispersion is preferably not less than 0.3, more preferably not less than 0.5 and even more preferably not less than 0.7, and is also preferably not more than 0.95, more preferably not more than 0.9 and even more preferably not more than 0.85, from the viewpoint of improving storage stability of the water-based pigment dispersion as well as adhesion properties and optical density of the water-based ink.

[Process for Producing Water-Based Pigment Dispersion]

The water-based pigment dispersion of the present invention may be produced by the method of subjecting a mixture containing the pigment, the (meth)acrylic resin (A) and the polyurethane resin (B) to dispersion treatment, the method of subjecting the pigment and either one of the (meth)acrylic resin (A) and the polyurethane resin (B) to dispersion treatment and then further adding the other of the components (A) and (B) to the resulting dispersion, and the like.

The (meth)acrylic resin (A) and the polyurethane resin (B) may be respectively used in the form of a dispersion prepared by dispersing the respective polymer particles in a water-based medium which may further contain a dispersant such as a surfactant, if required. The dispersions of these resins used herein may be either an appropriately synthesized product or a commercially available product.

Specific examples of commercially available products of the (meth)acrylic resin (A) include dispersions of acrylic resins such as "JONCRYL 390", "JONCRYL 7100", "JONCRYL 734" and "JONCRYL 538" (tradenames) all available from BASF Japan, Ltd., etc.; vinyl chloride-acrylic resins such as "VINYBLAN 701" (tradename) available from Nissin Chemical Co., Ltd., etc.; and the like.

Specific examples of commercially available products of the polyurethane resin (B) include "NeoRez R-9603" (tradename; aliphatic isocyanate-polycarbonate-based polyurethane) available from DSM Coating Resins, Inc., "SUPERFLEX 860" (tradename; aromatic isocyanate-polyester-based polyurethane) available from DSK Co., Ltd., and the like.

The water-based pigment dispersion of the present invention can be efficiently produced by the process including the following steps 1 and 2 from the viewpoint of improving storage stability of the water-based pigment dispersion as well as adhesion properties and optical density of the water-based ink.

Step 1: subjecting a pigment mixture containing the pigment, the acid group-containing (meth)acrylic resin (A) and the polyurethane resin (B) to dispersion treatment to obtain a dispersion; and
Step 2: subjecting the dispersion obtained in the step 1 to crosslinking treatment with the crosslinking agent (C).

(Step 1)

The water-based pigment dispersion of the present invention is preferably produced by the process further including the following steps 1-1 and 1-2 which are to be conducted before the step 1, from the viewpoint of improving storage stability of the water-based pigment dispersion as well as adhesion properties and optical density of the water-based ink.

Step 1-1: dispersing the pigment with the acid group-containing (meth)acrylic resin (A) to obtain a preliminary dispersion; and
Step 1-2: adding an emulsion of the polyurethane resin (B) to the preliminary dispersion obtained in the step 1-1 to obtain the pigment mixture containing the pigment, the acid group-containing (meth)acrylic resin (A) and the polyurethane resin (B).

[Step 1-1]

In the step 1-1, there is preferably used the method in which the (meth)acrylic resin (A) is first dissolved in an organic solvent, and then the pigment and water, if required together with a neutralizing agent, a surfactant and the like, are added to and mixed in the resulting organic solvent solution to obtain a dispersion of an oil-in-water type. The order of addition of the respective components to the organic solvent solution of the (meth)acrylic resin (A) is not particularly limited, and it is preferred that water, the neutralizing agent and the pigment are successively added thereto in this order.
The organic solvent used for dissolving the (meth)acrylic resin (A) is not particularly limited, and is preferably selected from aliphatic alcohols having not less than 1 and not more than 3 carbon atoms, ketones, ethers, esters and the like. Of these organic solvents, from the viewpoints of improving wettability to the pigment, dissolvability of the (meth)acrylic resin (A) therein and adsorption of the (meth)acrylic resin (A) onto the pigment, more preferred are ketones having not less than 4 and not more than 8 carbon atoms, even more preferred are methyl ethyl ketone and methyl isobutyl ketone, and further even more preferred is methyl ethyl ketone. When the (meth)acrylic resin (A) is synthesized by a solution polymerization method, the solvent used in the solution polymerization method may be directly used as such in the step 1-1.

(Neutralization)

The acid groups of the (meth)acrylic resin (A) are preferably partially neutralized using a neutralizing agent from the viewpoint of improving storage stability of the water-based pigment dispersion as well as adhesion properties and optical density of the water-based ink. When neutralizing the acid groups of the (meth)acrylic resin (A), the neutralization is preferably conducted such that the pH value of the resulting dispersion is not less than 7 and not more than 11.
As the neutralizing agent, there may be mentioned hydroxides of alkali metals, ammonia and the like. Examples of the hydroxides of alkali metals include lithium hydroxide, sodium hydroxide, potassium hydroxide and cesium hydroxide. Of these hydroxides of alkali metals, preferred are sodium hydroxide and potassium hydroxide. As the neutralizing agent, the hydroxides of alkali metals are preferably used from the viewpoint of improving storage stability of the water-based pigment dispersion as well as adhesion properties and optical density of the water-based ink. Also, the (meth)acrylic resin (A) may be previously neutralized.
The neutralizing agent is preferably used in the form of an aqueous neutralizing agent solution from the viewpoint of sufficiently and uniformly accelerating the neutralization. From the same viewpoint as described above, the concentration of the aqueous neutralizing agent solution is preferably not less than 3% by mass, more preferably not less than 10% by mass and even more preferably not less than 15% by mass, and is also preferably not more than 50% by mass and more preferably not more than 25% by mass.
The equivalent amount of the neutralizing agent used is preferably not less than 10 mol% and more preferably not less than 30 mol%, and is also preferably not more than 80 mol%, more preferably not more than 70 mol% and even more preferably not more than 60 mol%, from the viewpoint of improving storage stability of the water-based pigment dispersion as well as adhesion properties and optical density of the water-based ink.
The equivalent amount of the neutralizing agent used may be calculated according to the following formula. When the equivalent amount of the neutralizing agent used is not more than 100 mol%, the equivalent amount of the neutralizing agent used has the same meaning as the degree of neutralization of the (meth)acrylic resin (A) to be neutralized. On the other hand, when the equivalent amount of the neutralizing agent used as calculated according to

the following formula exceeds 100 mol%, it is meant that the neutralizing agent is present in an excessively large amount relative to the acid groups of the (meth)acrylic resin (A), and in such a case, the degree of neutralization of the (meth)acrylic resin (A) is regarded as being 100 mol%.

Equivalent amount (mol%) of neutralizing agent used = [{mass (g) of neutralizing agent added/equivalent amount of neutralizing agent}/[{acid value (mgKOH/g) of (meth)acrylic resin (A) x mass (g) of (meth)acrylic resin (A)}/(56 x 1,000)]] x 100.

(Contents of Respective Components in Preliminary Dispersion)

The contents of the respective components in the preliminary dispersion are as follows from the viewpoint of improving storage stability of the water-based pigment dispersion as well as adhesion properties and optical density of the water-based ink as well as productivity of the water-based pigment dispersion.

The content of the pigment in the preliminary dispersion in the step 1-1 is preferably not less than 5% by mass, more preferably not less than 10% by mass and even more preferably not less than 20% by mass, and is also preferably not more than 45% by mass, more preferably not more than 40% by mass and even more preferably not more than 35% by mass.

The content of the (meth)acrylic resin (A) in the preliminary dispersion in the step 1-1 is preferably not less than 1% by mass, more preferably not less than 3% by mass and even more preferably not less than 5% by mass, and is also preferably not more than 20% by mass, more preferably not more than 15% by mass and even more preferably not more than 10% by mass.

The content of the organic solvent in the preliminary dispersion in the step 1-1 is preferably not less than 5% by mass, more preferably not less than 7% by mass and even more preferably not less than 10% by mass, and is also preferably not more than 30% by mass, more preferably not more than 25% by mass and even more preferably not more than 20% by mass.

The content of water in the preliminary dispersion in the step 1-1 is preferably not less than 35% by mass, more preferably not less than 40% by mass and even more preferably not less than 45% by mass, and is also preferably not more than 80% by mass, more preferably not more than 70% by mass and even more preferably not more than 60% by mass.

The mass ratio of the pigment to a sum of the pigment and the (meth)acrylic resin (A) [pigment/[pigment + (meth)acrylic resin (A)]] in the preliminary dispersion is preferably not less than 0.3, more preferably not less than 0.5 and even more preferably not less than 0.7, and is also preferably not more than 0.95, more preferably not more than 0.9 and even more preferably not more than 0.85, from the viewpoint of improving storage stability of the water-based pigment dispersion as well as adhesion properties, optical density and productivity of the water-based pigment dispersion.

The dispersing method of obtaining the aforementioned preliminary dispersion in the step 1-1 is not particularly limited, and there may be used ordinary mixing and stirring devices such as anchor blades, disper blades and the like. Of these devices, preferred are high-speed stirring mixers.

The temperature used in the dispersion treatment in the step 1-1 is preferably not lower than 0°C, and is also preferably not higher than 40°C, more preferably not higher than 30°C and even more preferably not higher than 25°C.

The dispersing time used in the dispersion treatment in the step 1-1 is preferably not less than 0.5 hour, and is also preferably not more than 30 hours, more preferably not more than 10 hours, even more preferably not more than 5 hours and further even more preferably not more than 3 hours.

[Step 1-2]

The step 1-2 is the step of adding an emulsion of the polyurethane resin (B) to the preliminary dispersion obtained in the step 1-1 to obtain the pigment mixture containing the pigment, the acid group-containing (meth)acrylic resin (A) and the polyurethane resin (B).

The emulsion of the polyurethane resin (B) is formed by dispersing particles of the polyurethane resin (B) in a water-based medium, and may also contain a dispersant such as a surfactant, if required. The emulsion of the polyurethane resin (B) also acts as a fixing emulsion for improving adhesion properties of the resulting ink to a printing medium to obtain a printed material having high optical density.

The content of the polyurethane resin (B) particles in the emulsion of the polyurethane resin (B) is preferably not less than 10% by mass, more preferably not less than 20% by mass and even more preferably not less than 30%

by mass, and is also preferably not more than 60% by mass, more preferably not more than 50% by mass and even more preferably not more than 45% by mass, from the viewpoint of improving dispersion stability of the emulsion of the polyurethane resin (B) as well as from the viewpoint of improving storage stability of the water-based pigment dispersion as well as adhesion properties, optical density and productivity of the water-based pigment dispersion.

(Contents of Respective Components in Pigment Mixture)

The contents of the respective components in the pigment mixture are as follows from the viewpoint of improving storage stability of the water-based pigment dispersion as well as adhesion properties, optical density and productivity of the water-based pigment dispersion.

The content of the pigment in the pigment mixture is preferably not less than 3% by mass and more preferably not less than 5% by mass, and is also preferably not more than 30% by mass, more preferably not more than 20% by mass and even more preferably not more than 15% by mass.

The content of the (meth)acrylic resin (A) in the pigment mixture is preferably not less than 1% by mass, more preferably not less than 1.5% by mass and even more preferably not less than 2% by mass, and is also preferably not more than 20% by mass, more preferably not more than 10% by mass and even more preferably not more than 5% by mass.

The content of the polyurethane resin (B) in the pigment mixture is preferably not less than 1% by mass, more preferably not less than 2% by mass and even more preferably not less than 5% by mass, and is also preferably not more than 30% by mass, more preferably not more than 20% by mass and even more preferably not more than 15% by mass.

The content of the organic solvent in the pigment mixture is preferably not less than 3% by mass and more preferably not less than 5% by mass, and is also preferably not more than 30% by mass, more preferably not more than 25% by mass, even more preferably not more than 20% by mass and further even more preferably not more than 15% by mass.

The content of water in the pigment mixture is preferably not less than 35% by mass, more preferably not less than 40% by mass, even more preferably not less than 45% by mass and further even more preferably not less than 50% by mass, and is also preferably not more than 85% by mass, more preferably not more than 80% by mass and even more preferably not more than 75% by mass.

The mass ratio of the polyurethane resin (B) to the (meth)acrylic resin (A) [polyurethane resin (B)/(meth)acrylic resin (A)] in the pigment mixture is preferably not less than 0.15, more preferably not less than 0.5, even more preferably not less than 1, further even more preferably not less than 1.5 and still further even more preferably not less than 2, and is also preferably not more than 15, more preferably not more than 10, even more preferably not more than 7 and further even more preferably not more than 5.

The dispersion treatment of the pigment mixture is preferably conducted by applying a shear stress to the pigment mixture so as to control the average particle size of the obtained pigment particles to a desired value.

As a means for applying a shear stress to the pigment mixture, there may be used, for example, kneading machines such as roll mills, kneaders, etc., high-pressure homogenizers such as "MICROFLUIDIZER" available from Microfluidics Corporation, etc., and media-type dispersers such as paint shakers, beads mills, etc. Examples of the commercially available media-type dispersers include "Ultra Apex Mill" available from Kotobuki Industries Co., Ltd., "Pico Mill" available from Asada Iron Works Co., Ltd., and the like. These devices may be used in combination of any two or more thereof. Among these devices, the high-pressure homogenizers are preferably used from the viewpoint of reducing a particle size of the pigment.

In the case where the dispersion treatment is conducted using the high-pressure homogenizer, the particle size of the pigment can be adjusted to a desired value by controlling the treating pressure and the number of passes through the homogenizer.

The treating pressure used in the dispersion treatment is preferably not less than 60 MPa, more preferably not less than 100 MPa and even more preferably not less than 150 MPa, and is also preferably not more than 300 MPa and more preferably not more than 250 MPa, from the viewpoint of enhancing productivity of the water-based pigment dispersion and cost efficiency.

Also, the number of passes through the homogenizer is preferably controlled to not less than 3 and more preferably not less than 7, and is also preferably controlled to not more than 30 and more preferably not more than 20.

In the step 1, it is preferred that the organic solvent is further removed from the resulting dispersion by any conventionally known methods to obtain the water dispersion. The organic solvent is preferably substantially completely removed from the thus obtained water dispersion. However, the residual organic solvent may be present in the water dispersion unless the objects and advantageous effects of the present invention are adversely affected by the residual organic solvent. The content of the residual organic solvent in the water dispersion is preferably not more than 0.1% by mass and more preferably not more than 0.01% by mass.

In addition, if required, the dispersion may be subjected to heating and stirring treatments before removing the organic solvent therefrom by distillation.

(Step 2)

The step 2 is the step of subjecting the dispersion obtained in the step 1 to crosslinking treatment with the crosslinking agent (C).
By conducting the step 2, it is possible to obtain the water-based pigment dispersion formed by dispersing the pigment in a water-based medium with the crosslinked polymer dispersant.
In the present invention, it is preferred that in the step 1, the acid groups contained in the (meth)acrylic resin (A) are partially neutralized to disperse the pigment and obtain a dispersion, and then in the step 2, the acid groups contained in the (meth)acrylic resin (A) are further partially reacted with the crosslinking agent (C) to form a crosslinked structure in the resin, thereby obtaining the water-based pigment dispersion that is formed by dispersing the pigment in the water-based medium with the crosslinked polymer dispersant.
Moreover, as described above, in the case where both of the (meth)acrylic resin (A) and the polyurethane resin (B) contain the acid groups, it is considered that the acid groups contained in each of the (meth)acrylic resin (A) and the polyurethane resin (B) constituting the polymer dispersant are partially crosslinked with the crosslinking agent (C), so that crosslinked reaction is conducted between molecular chains of the (meth)acrylic resin (A), between molecular chains of the polyurethane resin (B) and between the molecular chain of the (meth)acrylic resin (A) and the molecular chain of the polyurethane resin (B) via the crosslinking agent (C) to thereby form a crosslinked structure therein.

(Crosslinking Reaction)

In the step 2, it is preferred that the dispersion obtained in the step 1 is mixed with the crosslinking agent (C) to subject the dispersion to crosslinking treatment.
The amount of the crosslinking agent (C) used in the step 2 in terms of the ratio of the mole equivalent number of the crosslinkable functional groups of the crosslinking agent (C) to the mole equivalent number of the acid groups of the (meth)acrylic resin (A) is preferably not less than 0.12, more preferably not less than 0.16 and even more preferably not less than 0.2, and is also preferably not more than 0.65, more preferably not more than 0.6, even more preferably not more than 0.5, further even more preferably not more than 0.4 and still further even more preferably not more than 0.3, from the viewpoint of improving storage stability of the water-based pigment dispersion as well as adhesion properties and optical density of the water-based ink.
From the viewpoint of completing the crosslinking reaction and attaining good cost efficiency, the time of the crosslinking treatment is preferably not less than 0.5 hour, more preferably not less than 1 hour, even more preferably not less than 1.5 hours and further even more preferably not less than 3 hours, and is also preferably not more than 12 hours, more preferably not more than 10 hours, even more preferably not more than 8 hours and further even more preferably not more than 5 hours.
From the same viewpoint as described above, the temperature used in the crosslinking treatment is preferably not lower than 40°C, more preferably not lower than 50°C, even more preferably not lower than 60°C and further even more preferably not lower than 70°C, and is also preferably not higher than 95°C and more preferably not higher than 90°C.
The water-based pigment dispersion of the present invention may contain glycerin, triethylene glycol or the like as a humectant in an amount of not less than 1% by mass and not more than 10% by mass for the purpose of preventing drying of the dispersion, and may also contain various other additives such as a mildew-proof agent, etc. These additives may be compounded when dispersing the pigment, or after dispersing the pigment or after completing the crosslinking reaction.
The water-based pigment dispersion of the present invention is preferably in the form of a dispersion formed by dispersing the pigment-containing polymer particles in a water-based medium containing water as a main medium. In this case, the configuration of the pigment-containing polymer particles is not particularly limited, and the pigment-containing polymer particles may have any configuration as long as the particles are formed of at least the pigment and the polymer. More specifically, the particles may be formed of at least the pigment as well as the (meth)acrylic resin (A) and the polyurethane resin (B). Examples of the configuration of the pigment-containing polymer particles include the particle configuration in which the pigment is enclosed or encapsulated in the polymer, the particle configuration in which the pigment is uniformly dispersed in the polymer, and the particle configuration in which the pigment is exposed onto a surface of the respective polymer particles, etc., as well as a mixture of these particle configurations.
Moreover, the resulting water-based pigment dispersion may also have such a configuration that not only the pigment-containing polymer particles, but also the polyurethane resin (B) particles, are dispersed in the water-based medium.
The concentration of non-volatile components in the water-based pigment dispersion of the present invention

(solid content of the water-based pigment dispersion) is preferably not less than 10% by mass and more preferably not less than 15% by mass, and is also preferably not more than 30% by mass and more preferably not more than 25% by mass, from the viewpoint of improving dispersion stability of the resulting water-based pigment dispersion as well as from the viewpoint of facilitating preparation of the water-based ink.

Meanwhile, the solid content of the water-based pigment dispersion may be measured by the method described in Examples below.

The average particle size of the pigment-containing polymer particles in the water-based pigment dispersion is preferably not less than 50 nm, more preferably not less than 60 nm and even more preferably not less than 70 nm, and is also preferably not more than 200 nm, more preferably not more than 160 nm and even more preferably not more than 150 nm, from the viewpoint of suppressing formation of coarse particles, and improving storage stability of the water-based pigment dispersion as well as adhesion properties and optical density of the water-based ink, and further from the viewpoint of improving ejection stability of the resulting water-based ink when used as a water-based pigment dispersion for ink-jet printing.

Meanwhile, the average particle size of the water-based pigment dispersion, preferably the average particle size of the pigment-containing polymer particles contained therein, may be measured by the method described in Examples below.

In addition, the average particle size of the pigment-containing polymer particles in the water-based ink is the same as the average particle size of the pigment-containing polymer particles in the water-based pigment dispersion. Moreover, the preferred range of the average particle size of the pigment-containing polymer particles in the water-based ink is also the same as the preferred range of the average particle size of the pigment-containing polymer particles in the water-based pigment dispersion.

[Water-Based Ink]

The water-based pigment dispersion of the present invention is preferably compounded and used in a water-based ink (hereinafter also referred to as a "water-based ink" or merely as an "ink"). The resulting water-based ink can be enhanced in storage stability, as well as adhesion properties and optical density when printed on a non-water-absorbing printing medium. The water-based pigment dispersion of the present invention may be directly used as the water-based ink. However, from the viewpoint of improving storage stability of the resulting water-based ink, as well as adhesion properties and optical density of the water-based ink, it is preferred that the water-based pigment dispersion is further compounded with an organic solvent when used as the water-based ink. The organic solvent preferably contains one or more organic solvents having a boiling point of not lower than 90°C. The weighted mean value of the boiling point of the organic solvent containing the one or more organic solvents is preferably not lower than 150°C and more preferably not lower than 180°C, and is also preferably not higher than 240°C, more preferably not higher than 220°C and even more preferably not higher than 200°C.

Examples of the aforementioned organic solvent include a polyhydric alcohol, a polyhydric alcohol alkyl ether, a nitrogen-containing heterocyclic compound, an amide, an amine, a sulfur-containing compound and the like. Of these organic solvents, preferred is at least one compound selected from the group consisting of a polyhydric alcohol and a polyhydric alcohol alkyl ether, more preferred is at least one compound selected from the group consisting of ethylene glycol, propylene glycol, diethylene glycol, triethylene glycol, polyethylene glycol, glycerin, trimethylolpropane and diethylene glycol diethyl ether, and even more preferred is propylene glycol.

The water-based ink may further contain a water dispersion of pigment-free polymer particles from the viewpoint of improving adhesion properties and optical density, etc. The water dispersion of the pigment-free polymer particles is able to function as a fixing assistant. It is considered that the two different kinds of resins that are contained in the polymer dispersant used in the water-based pigment dispersion of the present invention are adsorbed or fixed onto the pigment. For this reason, even in the case where the water-based ink further contains the pigment-free polymer particles, a smooth coating film of the ink can be formed on a printing medium owing to good affinity between the polymer particles and the polymer dispersant, so that the resulting water-based ink can be prevented from suffering from local flocculation of the pigment particles, and can be improved in adhesion properties without deterioration in optical density.

Examples of the polymer constituting the pigment-free polymer particles include condensation-based polymers such as polyurethane resins, polyester resins, etc.; and vinyl-based polymers such as acrylic resins, styrene-based resins, styrene-acrylic resins, butadiene-based resins, styrene-butadiene-based resins, vinyl chloride-based resins, vinyl acetate-based resins, acrylic silicone-based resins, etc.

The water dispersion of the pigment-free polymer particles may be either an appropriately synthesized product or a commercially available product. When using a dispersion of pigment-free polyurethane resin particles, the aforementioned emulsion of the polyurethane resin (B) may be used as such a dispersion.

Examples of commercially available products of the dispersion of pigment-free vinyl-based polymer particles include dispersions of acrylic resins such as "NeoCryl A1127" (tradename; anionic self-crosslinkable water-based acrylic

resin) available from DSM Coating Resins, Inc., and "JONCRYL 390", JONCRYL 7100", "JONCRYL 7600", "JONCRYL 537J", "JONCRYL PDX-7164", "JONCRYL 538J" and "JONCRYL 780" (tradenames) all available from BASF Japan, Ltd., etc.; urethane-based resins such as "WBR-2018" and "WBR-2000U" (tradenames) both available from Taisei Fine Chemical Co., Ltd., etc.; styrene-butadiene resins such as "SR-100" and "SR-102" (tradenames) both available from Nippon A & L Inc., etc.; vinyl chloride-based resins such as "VINYBLAN 700" and "VINYBLAN 701" (tradenames) both available from Nissin Chemical Co., Ltd., etc. and the like.

The amount of the water dispersion of the pigment-free polymer particles compounded in the water-based ink in terms of a solid content of the water dispersion is preferably not more than 10% by mass, more preferably not more than 7% by mass and even more preferably not more than 5% by mass from the viewpoint of improving storage stability of the resulting water-based ink, as well as adhesion properties and optical density thereof.

The water-based ink may be further compounded with various additives that may be usually used in water-based inks, such as a humectant, a wetting agent, a penetrant, a surfactant, a viscosity modifier, a defoaming agent, an antiseptic agent, a mildew-proof agent, a rust preventive, etc., if required, and then further subjected to filtration treatment through a filter, etc.

The contents of the respective components in the water-based ink as well as properties of the ink are as follows.

(Content of Pigment)

The content of the pigment in the water-based ink is preferably not less than 1% by mass, more preferably not less than 2% by mass and even more preferably not less than 3% by mass from the viewpoint of enhancing optical density of the water-based ink, and is also preferably not more than 15% by mass, more preferably not more than 10% by mass and even more preferably not more than 7% by mass from the viewpoint of reducing viscosity of the resulting water-based ink upon volatilizing the solvent therefrom and improving storage stability of the water-based ink.

(Total Content of Pigment and Polymer Dispersant)

The total content of the pigment and the polymer dispersant in the water-based ink is preferably not less than 2% by mass, more preferably not less than 3% by mass, even more preferably not less than 5% by mass and further even more preferably not less than 7% by mass from the viewpoint of improving adhesion properties of the water-based ink, and is also preferably not more than 20% by mass, more preferably not more than 15% by mass and even more preferably not more than 12% by mass from the viewpoint of reducing viscosity of the resulting water-based ink upon volatilizing the solvent therefrom and improving storage stability of the water-based ink.

(Content of Organic Solvent)

The content of the organic solvent in the water-based ink is preferably not less than 3% by mass, more preferably not less than 5% by mass and even more preferably not less than 7% by mass, and is also preferably not more than 25% by mass, more preferably not more than 20% by mass and even more preferably not more than 15% by mass, from the viewpoint of improving storage stability of the resulting water-based ink, as well as adhesion properties and optical density thereof.

(Content of Water)

The content of water in the water-based ink is preferably not less than 50% by mass, more preferably not less than 60% by mass and even more preferably not less than 70% by mass, and is also preferably not more than 90% by mass and more preferably not more than 85% by mass, from the viewpoint of improving storage stability of the resulting water-based ink, as well as adhesion properties and optical density thereof.

The mass ratio of the pigment to whole solid components of the water-based ink [pigment/(whole solid components of water-based ink)] is preferably not less than 0.25, more preferably not less than 0.3, even more preferably not less than 0.35 and further even more preferably not less than 0.4, and is also preferably not more than 0.75, more preferably not more than 0.7, even more preferably not more than 0.6 and further even more preferably not more than 0.5, from the viewpoint of improving storage stability of the resulting water-based ink, as well as adhesion properties and optical density thereof.

(Properties of Water-Based Ink)

The viscosity of the water-based ink as measured at 32°C is preferably not less than 2 mPa • s, more preferably not less than 3 mPa • s and even more preferably not less than 5 mPa • s, and is also preferably not more than 12 mPa

• s, more preferably not more than 9 mPa • s and even more preferably not more than 7 mPa • s, from the viewpoint of improving storage stability of the resulting water-based ink.

The viscosity of the water-based ink may be measured using an E-type viscometer.

The pH value of the water-based ink as measured at 20°C is preferably not less than 7.0, more preferably not less than 7.2 and even more preferably not less than 7.5 from the viewpoint of improving storage stability of the resulting water-based ink, and is also preferably not more than 11, more preferably not more than 10 and even more preferably not more than 9.5 from the viewpoint of improving the resistance of members to the water-based ink and suppressing skin irritation.

The pH value of the water-based ink at 20°C may be measured by an ordinary method.

The water-based ink can be suitably used for an ink for flexographic printing, an ink for gravure printing or an ink for ink-jet printing. In particular, the water-based ink is preferably used for an ink for ink-jet printing. The water-based ink may be loaded to a conventionally known ink-jet printing apparatus from which droplets of the ink are ejected onto a printing medium to print characters or images, etc., on the printing medium.

Although the ink-jet printing apparatus may be of either a thermal type or a piezoelectric type, the water-based ink containing the water-based pigment dispersion of the present invention is more preferably used as a water-based ink for ink-jet printing using an ink-jet printing apparatus of a piezoelectric type.

Examples of the printing medium used herein include a high-water absorbing plain paper, a low-water absorbing coated paper and a non-water absorbing resin film. Specific examples of the coated paper include a versatile glossy coated paper, a multi-color foam glossy coated paper, and the like. As the resin film, preferred is at least one film selected from the group consisting of a polyester film, a polyvinyl chloride film, a polypropylene film and a polyethylene film. In the resin film, there may be used a substrate subjected to corona treatment.

Examples of generally commercially available products of the resin film include "LUMIRROR T60" (polyester) available from Toray Industries Inc., "PVC80B P" (polyvinyl chloride) available from Lintec Corporation, "DGS-210WH" (polyvinyl chloride) available from Roland DG Corporation, a transparent polyvinyl chloride film "RE-137" (polyvinyl chloride) available from MIMAKI ENGINEERING Co., Ltd., "KINATH KEE 70CA" (polyethylene) available from Lintec Corporation, "YUPO SG90 PAT1" (polypropylene) available from Lintec Corporation, "FOR" and "FOA" (polypropylene) both available from Futamura Chemical Co, Ltd., "BONYL RX" (nylon) available from Kohjin Film & Chemicals Co., Ltd., "EMBLEM ONBC" (nylon) available from UNITIKA Ltd., and the like.

## EXAMPLES

In the following Preparation Examples, Examples and Comparative Examples, the "part(s)" and "%" indicate "part(s) by mass" and "% by mass", respectively, unless otherwise specified.

Meanwhile, various properties of the dispersions obtained in the respective Preparation Examples, Examples and Comparative Examples were measured and evaluated by the following methods.

### (1) Measurement of Number-Average Molecular Weight of (Meth)acrylic Resin (A)

The number-average molecular weight of the (meth)acrylic resin (A) was measured by gel permeation chromatography [GPC apparatus: "HLC-8320GPC" available from Tosoh Corporation; columns: "TSKgel Super AWM-H", "TSKgel Super AW3000" and "TSKgel guard column Super AW-H" all available from Tosoh Corporation; flow rate: 0.5 mL/min] using a solution prepared by dissolving phosphoric acid and lithium bromide in *N,N*-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a material prepared by mixing 0.1 g of the (meth)acrylic resin (A) with 10 mL of the aforementioned eluent in a glass vial, stirring the resulting mixture at 25°C for 10 hours with a magnetic stirrer, and then subjecting the mixture to filtration treatment through a syringe filter "DISMIC-13HP PTFE" (0.2 μm) available from Advantec Co., Ltd.

### (2) Measurement of Average Particle Size of Water-Based Pigment Dispersion

The cumulant average particle size measured using a laser particle analyzing system "ELS-8000" (cumulant analysis) available from Otsuka Electrics Co., Ltd., was defined as an average particle size of the water-based pigment dispersion. The above measurement was conducted under the conditions including a temperature of 25°C, an angle between incident light and detector of 90° and a cumulative number of 100 times, and a refractive index of water (1.333) was input to the analyzing system as a refractive index of the dispersing medium. The concentration of the dispersion

to be measured was usually controlled to about to 5 x $10^{-3}$% upon conducting the measurement.

(3) Measurement of Solid Content

Sodium sulfate dried to constant weight in a desiccator was weighed in an amount of 10.0 g and charged into a 30 mL polypropylene container (ϕ: 40 mm; height: 30 mm), and about 1.0 g of a sample to be measured was added to the container. The contents of the container were mixed with each other and then accurately weighed. The resulting mixture was maintained in the container at 105°C for 2 hours to remove volatile components therefrom, and further allowed to stand in a desiccator for 15 minutes to measure a mass thereof. The mass of the sample after removing the volatile components therefrom was regarded as a mass of solids therein. The solid content of the sample was calculated by dividing the mass of the solids by the mass of the sample initially added.

<Preparation of (Meth)acrylic Resin (A)>

Preparation Example 1

Sixty parts of acrylic acid (reagent) available from Wako Pure Chemical Industries, Ltd., 130 parts of styrene available from Wako Pure Chemical Industries, Ltd., and 10 parts of $\alpha$-methyl styrene (reagent) available from Wako Pure Chemical Industries, Ltd., were mixed to prepare a monomer mixture solution. Twenty parts of methyl ethyl ketone (MEK) and 0.3 part of 2-mercaptoethanol as a polymerization chain transfer agent as well as 10% of the monomer mixture solution prepared above were charged into a reaction vessel and mixed with each other, and then an inside atmosphere of the reaction vessel was fully replaced with nitrogen gas.

On the other hand, a mixed solution prepared by mixing remaining 90% of the monomer mixture solution, 0.27 part of the aforementioned polymerization chain transfer agent, 60 parts of MEK and 2.2 parts of an azo-based radical polymerization initiator "V-65" (tradename; 2,2'-azobis(2,4-dimethylvaleronitrile)) available from Wako Pure Chemical Industries, Ltd., was charged into a dropping funnel. In a nitrogen atmosphere, the monomer mixed solution in the reaction vessel was heated to 65°C while stirring, and then the mixed solution in the dropping funnel was added dropwise thereinto over 3 hours. After the elapse of 2 hours from completion of the dropwise addition while maintaining the mixed solution at 65°C, a solution prepared by dissolving 0.3 part of the aforementioned polymerization initiator in 5 parts of MEK was added to the reaction vessel, and the resulting reaction solution was further aged at 65°C for 2 hours and then at 70°C for 2 hours, thereby obtaining a solution of a (meth)acrylic resin (A-1) (acid value: 234 mgKOH/g; number-average molecular weight: 11,000).

Preparation Example 2

Thirty parts of methacrylic acid (reagent) available from Wako Pure Chemical Industries, Ltd., 100 parts of styrene (reagent) available from Wako Pure Chemical Industries, Ltd., 60 parts of a styrene macromer "AS-6S" (tradename; number-average molecular weight: 6000; solid content: 50%) (30 parts as solid components therein) available from Toagosei Co., Ltd., and 40 parts of polypropylene glycol monomethacrylate "BLEMMER PP-800" (tradename; average molar number of addition of propyleneoxide: 13; end group: hydroxy group) available from NOF Corporation were mixed to prepare a monomer mixture solution. Twenty parts of methyl ethyl ketone (MEK) and 0.3 part of 2-mercaptoethanol as a polymerization chain transfer agent as well as 10% of the monomer mixture solution prepared above were charged into a reaction vessel and mixed with each other, and then an inside atmosphere of the reaction vessel was fully replaced with nitrogen gas.

On the other hand, a mixed solution prepared by mixing remaining 90% of the monomer mixture solution, 0.27 part of the aforementioned polymerization chain transfer agent, 60 parts of MEK and 2.2 parts of an azo-based radical polymerization initiator "V-65" (tradename; 2,2'-azobis(2,4-dimethylvaleronitrile)) available from Wako Pure Chemical Industries, Ltd., was charged into a dropping funnel. The subsequent procedure was carried out in the same manner as in Preparation Example 1, thereby obtaining a solution of a (meth)acrylic resin (A-2) (acid value: 98 mgKOH/g; number-average molecular weight: 50,000).

<Production of Water-Based Pigment Dispersion>

Example 1

(Step 1-1)

Thirty five parts of the (meth)acrylic resin (A-1) produced by drying the polymer solution obtained in Preparation

Example 1 under reduced pressure was mixed with 40 parts of MEK. Then, 14 parts of a 5N sodium hydroxide aqueous solution (solid components of sodium hydroxide: 16.9%; for volumetric titration) available from Wako Pure Chemical Industries, Ltd., were further added into the resulting mixed solution to neutralize the (meth)acrylic resin (A-1) such that an equivalent amount of the neutralizing agent used was 40 mol%. Furthermore, 180 parts of ion-exchanged water were added to the mixed solution, and then 100 parts of a carbon black pigment "MONARCH 717" (tradename; C.I. Pigment Black 7) available from Cabot Specialty Chemicals, Inc., were added to the resulting mixture. The thus obtained mixture was stirred at 20°C for 60 minutes using a disper "ULTRA DISPER" (tradename) available from Asada Iron Works Co., Ltd., while operating a disper blade thereof at a rotating speed of 7,000 rpm, thereby obtaining a preliminary dispersion (1).

(Step 1-2)

The preliminary dispersion (1) obtained in the step 1-1 was mixed with 504 parts (active solid ingredient: 191.5 parts) of a polyurethane resin (B-1) emulsion "NeoRez R-9603" (tradename; aliphatic isocyanate-polycarbonate-based polyurethane emulsion; solid content: 38%; acid value: 32 mgKOH/g) available from DSM Coating Resins, Inc., 60 parts of MEK and 650 parts of ion-exchanged water (W1), thereby obtaining a pigment mixture.

(Step 1)

The pigment mixture obtained in the step 1-2 was subjected to dispersion treatment under a pressure of 200 MPa using "Microfluidizer" (tradename) available from Microfluidics Corporation by passing the pigment mixture through the device 10 times, thereby obtaining a dispersion liquid.

The thus obtained dispersion liquid was mixed with 260 parts of ion-exchanged water (W2) and stirred together, and then allowed to stand at 60°C under reduced pressure to remove MEK therefrom, followed by further removing a part of water therefrom. The resulting dispersion was subjected to filtration treatment using a 25 mL-capacity needleless syringe available from Terumo Corporation fitted with a 5 μm-pore size filter (acetyl cellulose membrane; outer diameter: 2.5 cm) available from FUJIFILM Corporation to remove coarse particles therefrom, thereby obtaining a dispersion (d-1) having a solid content of 25%.

(Step 2)

A threaded neck glass bottle was charged with 100 parts of the dispersion (d-1) obtained in the step 1 and then with 0.35 part of trimethylolpropane polyglycidyl ether "DENACOL EX-321L" (tradename; epoxy equivalent: 129) as a crosslinking agent (C) available from Nagase ChemteX Corporation, and then the glass bottle was hermetically sealed with a cap. The contents of the glass bottle were heated at 70°C for 5 hours while stirring with a stirrer. Thereafter, the contents of the glass bottle were cooled to room temperature, and then subjected to filtration treatment using a 25 mL-capacity needleless syringe available from Terumo Corporation fitted with a 5 μm-pore size filter (acetyl cellulose membrane; outer diameter: 2.5 cm) available from FUJIFILM Corporation, thereby obtaining a water-based pigment dispersion (D-1) having a solid content of 25%. The average particle size of the thus obtained water-based pigment dispersion (D-1) was 102 nm.

Example 2

The same procedure as in Example 1 was repeated except that the amounts of the emulsion of the polyurethane resin (B-1), MEK and ion-exchanged water (W1) used in the step 1-2 of Example 1 were changed to 286 parts (active solid ingredients: 108.7 parts), 50 parts and 480 parts, respectively; and the amount of "DENACOL EX-321L" added in the step 2 of Example 1 was changed to 0.47 part, thereby obtaining a water-based pigment dispersion (D-2).

Example 3

The same procedure as in Example 1 was repeated except that the amounts of the emulsion of the polyurethane resin (B-1), MEK and ion-exchanged water (W1) used in the step 1-2 of Example 1 were changed to 153 parts (active solid ingredients: 58.1 parts), 40 parts and 380 parts, respectively; the amount of ion-exchanged water (W2) used in the step 1 of Example 1 was changed to 160 parts; and the amount of "DENACOL EX-321L" added in the step 2 of Example 1 was changed to 0.59 part, thereby obtaining a water-based pigment dispersion (D-3).

Example 4

The same procedure as in Example 1 was repeated except that the amounts of the (meth)acrylic resin (A-1),

MEK, the 5N sodium hydroxide aqueous solution and ion-exchanged water used in the step 1-1 of Example 1 were changed to 25 parts, 35 parts, 10 parts and 164 parts, respectively; the amounts of the emulsion of the polyurethane resin (B-1), MEK and ion-exchanged water (W1) used in the step 1-2 of Example 1 were changed to 97 parts (active solid ingredients: 36.9 parts), 30 parts and 320 parts, respectively; the amount of ion-exchanged water (W2) used in the step 1 of Example 1 was changed to 140 parts; and the amount of "DENACOL EX-321L" added in the step 2 of Example 1 was changed to 0.5 part, thereby obtaining a water-based pigment dispersion (D-4).

Example 5

The same procedure as in Example 1 was repeated except that the amounts of the (meth)acrylic resin (A-1), MEK, the 5N sodium hydroxide aqueous solution and ion-exchanged water used in the step 1-1 of Example 1 were changed to 25 parts, 35 parts, 10 parts and 164 parts, respectively; the amounts of the emulsion of the polyurethane resin (B-1), MEK and ion-exchanged water (W1) used in the step 1-2 of Example 1 were changed to 35 parts (active solid ingredients: 13.3 parts), 30 parts and 270 parts, respectively; and the amount of "DENACOL EX-321L" added in the step 2 of Example 1 was changed to 0.6 part, thereby obtaining a water-based pigment dispersion (D-5).

Example 6

The same procedure as in Example 1 was repeated except that the (meth)acrylic resin (A-1) used in the step 1-1 of Example 1 was replaced with the (meth)acrylic resin (A-2) obtained by drying the polymer solution prepared in Preparation Example 2 under reduced pressure, and the amounts of MEK and the 5N sodium hydroxide aqueous solution used in the step 1-1 of Example 1 were changed to 37 parts and 5.86 parts, respectively; the amounts of the emulsion of the polyurethane resin (B-1), MEK and ion-exchanged water (W1) used in the step 1-2 of Example 1 were changed to 291 parts (active solid ingredients: 110.6 parts), 50 parts and 480 parts, respectively; and the amount of "DENACOL EX-321L" added in the step 2 of Example 1 was changed to 0.195 part, thereby obtaining a water-based pigment dispersion (D-6).

Example 7

The same procedure as in Example 1 was repeated except that the (meth)acrylic resin (A-1) used in the step 1-1 of Example 1 was replaced with the (meth)acrylic resin (A-2) obtained by drying the polymer solution prepared in Preparation Example 2 under reduced pressure, and the amounts of MEK, the 5N sodium hydroxide aqueous solution and ion-exchanged water used in the step 1-1 of Example 1 were changed to 80 parts, 6 parts and 140 parts, respectively; the emulsion of the polyurethane resin (B-1) used in the step 1-2 of Example 1 was replaced with 315 parts (active solid ingredients: 110.3 parts) of an emulsion of a polyurethane resin (B-2) "SUPERFLEX 860" (tradename; aromatic isocyanate-polyester-based polyurethane emulsion; solid content: 35%) available from DSK Co., Ltd., and the amounts of MEK and ion-exchanged water (W1) used in the step 1-2 of Example 1 were changed to 30 parts and 460 parts, respectively; the amount of ion-exchanged water (W2) used in the step 1 of Example 1 was changed to 190 parts; and the amount of "DENACOL EX-321L" added in the step 2 of Example 1 was changed to 0.2 part, thereby obtaining a water-based pigment dispersion (D-7).

Example 8

The same procedure as in Example 1 was repeated except that the amounts of the emulsion of the polyurethane resin (B-1), MEK and ion-exchanged water (W1) used in the step 1-2 of Example 1 were changed to 286 parts (active solid ingredients: 108.7 parts), 50 parts and 480 parts, respectively; and the amount of "DENACOL EX-321L" added in the step 2 of Example 1 was replaced with 0.55 part of 1,6-hexanediol diglycidyl ether "DENACOL EX-212" (tradename; epoxy equivalent: 151) available from Nagase ChemteX Corporation, thereby obtaining a water-based pigment dispersion (D-8).

Example 9

The same procedure as in Example 1 was repeated except that the amounts of the emulsion of the polyurethane resin (B-1), MEK and ion-exchanged water (W1) used in the step 1-2 of Example 1 were changed to 286 parts (active solid ingredients: 108.7 parts), 50 parts and 480 parts, respectively; and the amount of "DENACOL EX-321L" added in the step 2 of Example 1 was changed to 0.29 part, thereby obtaining a water-based pigment dispersion (D-9).

Example 10

The same procedure as in Example 1 was repeated except that the amounts of the emulsion of the polyurethane resin (B-1), MEK and ion-exchanged water (W1) used in the step 1-2 of Example 1 were changed to 286 parts (active solid ingredients: 108.7 parts), 50 parts and 480 parts, respectively; and the amount of "DENACOL EX-321L" added in the step 2 of Example 1 was changed to 0.7 part, thereby obtaining a water-based pigment dispersion (D-10).

Example 11

The same procedure as in Example 1 was repeated except that the amounts of the emulsion of the polyurethane resin (B-1), MEK and ion-exchanged water (W1) used in the step 1-2 of Example 1 were changed to 286 parts (active solid ingredients: 108.7 parts), 50 parts and 480 parts, respectively; and the amount of "DENACOL EX-321L" added in the step 2 of Example 1 was changed to 0.98 part, thereby obtaining a water-based pigment dispersion (D-11).

Comparative Example 1

The same procedure as in Example 1 was repeated except that the amounts of the (meth)acrylic resin (A-1), MEK, the 5N sodium hydroxide aqueous solution and ion-exchanged water used in the step 1-1 of Example 1 were changed to 18 parts, 30 parts, 7 parts and 160 parts, respectively; the amounts of the emulsion of the polyurethane resin (B-1), MEK and ion-exchanged water (W1) used in the step 1-2 of Example 1 were changed to 10 parts (active solid ingredients: 3.8 parts), 20 parts and 240 parts, respectively; the amount of ion-exchanged water (W2) used in the step 1 of Example 1 was changed to 100 parts; and the amount of "DENACOL EX-321L" added in the step 2 of Example 1 was changed to 0.5 part, thereby obtaining a water-based pigment dispersion (D-C1).

Comparative Example 2

The same procedure as in Example 1 was repeated except that the amounts of the emulsion of the polyurethane resin (B-1), MEK and ion-exchanged water (W1) used in the step 1-2 of Example 1 were changed to 286 parts (active solid ingredients: 108.7 parts), 50 parts and 480 parts, respectively; and the amount of "DENACOL EX-321L" added in the step 2 of Example 1 was changed to 0.16 part, thereby obtaining a water-based pigment dispersion (D-C2).

Comparative Example 3

The same procedure as in Example 1 was repeated except that the amounts of the emulsion of the polyurethane resin (B-1), MEK and ion-exchanged water (W1) used in the step 1-2 of Example 1 were changed to 286 parts (active solid ingredients: 108.7 parts), 50 parts and 480 parts, respectively; and the amount of "DENACOL EX-321L" added in the step 2 of Example 1 was changed to 1.37 parts, thereby obtaining a water-based pigment dispersion (D-C3).

Comparative Example 4

(Step 1'-1)

The (meth)acrylic resin (A-1) produced by drying the polymer solution obtained in Preparation Example 1 under reduced pressure was weighed in an amount of 132.4 parts, and mixed with 51 parts of MEK. Then, 52.2 parts of a 5N sodium hydroxide aqueous solution (solid components of sodium hydroxide: 16.9%; for volumetric titration) available from Wako Pure Chemical Industries, Ltd., were further added into the resulting mixed solution to neutralize the resin such that an equivalent amount of the neutralizing agent used was 40% (neutralization degree: 40%). Furthermore, 468 parts of ion-exchanged water were added to the mixed solution, and then 100 parts of a carbon black pigment "MONARCH 717" (tradename; C.I. Pigment Black 7) available from Cabot Specialty Chemicals, Inc., were added to the resulting mixture. The thus obtained mixture was stirred at 20°C for 60 minutes using a disper "ULTRA DISPER" (tradename) available from Asada Iron Works Co., Ltd., while operating a disper blade thereof at a rotating speed of 7,000 rpm, thereby obtaining a preliminary dispersion (4').

(Step 1'-2)

The preliminary dispersion (4') obtained in the step 1'-1 was mixed with 160 parts of ion-exchanged water (W1), thereby obtaining a pigment mixture.

(Step 1')

The pigment mixture obtained in the step 1'-2 was subjected to dispersion treatment under a pressure of 200 MPa using "Microfluidizer" (tradename) available from Microfluidics Corporation by passing the pigment mixture through the device 10 times, thereby obtaining a dispersion liquid.

The thus obtained dispersion liquid was mixed with 180 parts of ion-exchanged water (W2) and stirred together, and then allowed to stand at 60°C under reduced pressure to remove MEK therefrom, followed by further removing a part of water therefrom. The resulting dispersion was subjected to filtration treatment using a 25 mL-capacity needleless syringe available from Terumo Corporation fitted with a 5 μm-pore size filter (acetyl cellulose membrane; outer diameter: 2.5 cm) available from FUJIFILM Corporation to remove coarse particles therefrom, thereby obtaining a dispersion (d-C4) having a solid content of 25%.

(Step 2')

A threaded neck glass bottle was charged with 100 parts of the dispersion (d-C4) obtained in the step 1' and then with 1.62 parts of trimethylolpropane polyglycidyl ether "DENACOL EX-321L" (tradename; epoxy equivalent: 129) as a crosslinking agent (C) available from Nagase ChemteX Corporation, and then the glass bottle was hermetically sealed with a cap. The contents of the glass bottle were heated at 70°C for 5 hours while stirring with a stirrer. Thereafter, the contents of the glass bottle were cooled to room temperature, and then subjected to filtration treatment using a 25 mL-capacity needleless syringe available from Terumo Corporation fitted with a 5 μm-pore size filter (acetyl cellulose membrane; outer diameter: 2.5 cm) available from FUJIFILM Corporation, thereby obtaining a water-based pigment dispersion (D-C4).

Comparative Example 5

The same procedure as in Comparative Example 4 was repeated except that the amounts of the (meth)acrylic resin (A-1), MEK, the 5N sodium hydroxide aqueous solution and ion-exchanged water used in the step 1'-1 of Comparative Example 4 were changed to 38 parts, 30 parts, 15 parts and 285 parts, respectively; and the amount of "DENACOL EX-321L" added in the step 2' of Comparative Example 4 was changed to 0.78 part, thereby obtaining a water-based pigment dispersion (D-C5).

<Evaluation Test for Water-Based Pigment Dispersions>

Test 1 (Evaluation of Storage Stability)

A screw vial was filled with the respective water-based pigment dispersions obtained in the aforementioned Examples and Comparative Examples and hermetically sealed, and then allowed to stand for storage in a thermostatic chamber adjusted to a temperature of 70°C for 7 days for each dispersion. The average particle sizes of the respective water-based pigment dispersions before and after the storage were measured by the method described in the aforementioned item (2), and the rate of increase in average particle size of each of the water-based pigment dispersions was calculated from the following formula. The results are shown in Tables 1 to 3. The smaller the rate of increase in average particle size becomes, the less the amount of the pigment particles flocculated is, and the more excellent the storage stability of the respective water-based pigment dispersions is.

$$\text{Rate (\%) of increase in average particle size} = \{[(\text{average particle size of water-based pigment dispersion after storage}) - (\text{average particle size of water-based pigment dispersion before storage})]/(\text{average particle size of water-based pigment dispersion before storage})\} \times 100$$

<Evaluation Tests for Water-Based Inks>

(Preparation of Water-Based Inks 1 to 13 and C1 to C6)

The respective water-based pigment dispersions obtained in the aforementioned Examples and Comparative

Examples were mixed with propylene glycol and a polyether-modified silicone surfactant "KF-6011" (tradename; PEG-11 methyl ether dimethicone) as a surfactant available from Shin-Etsu Chemical Co., Ltd., such that concentrations of the pigment, propylene glycol and the polyether-modified silicone surfactant on the basis of the resulting water-based ink as a whole were 4%, 10% and 1%, respectively, and the resulting mixture was further mixed with ion-exchanged water in such an amount that a whole amount of the respective components added was 100%, followed by intimately mixing the resulting solution while stirring with a magnetic stirrer. Then, the resulting mixed was subjected to filtration treatment using the aforementioned 5 μm filter and needleless syringe in the same manner as described hereinbefore to remove coarse particles therefrom to thereby obtain respective water-based inks.

In addition, in Examples 12 and 13 and Comparative Example 6, the respective water-based pigment dispersions shown in Table 3 were used and mixed with an emulsion a polyurethane resin "NeoRez R-9603" (tradename) available from DSM Coating Resins, Inc., as a water dispersion of pigment-free polymer particles upon preparation of the ink.

The resulting water-based inks 1 to 13 and C1 to C6 were respectively subjected to the following tests 2 and 3 to evaluate properties thereof. The results are shown in Tables 1 to 3.

Meanwhile, the "composition of ink formulated" as shown in Tables 1 to 3 represents amounts (%) of the respective components compounded assuming that a whole amount of the resulting ink was 100%. In addition, the respective notations shown in Tables 1 to 3 are as follows.

*1: Mass ratio of polyurethane resin (B) to (meth)acrylic resin (A) [polyurethane resin (B)/(meth)acrylic resin (A)] in water-based pigment dispersion
*2: Mass ratio of pigment to whole solid components of water-based pigment dispersion [pigment/(whole solid components of water-based pigment dispersion)]
*3: Mass ratio of pigment to whole solid components of water-based ink [pigment/whole solid components of water-based ink]
*4: Rate (%) of increase in average particle size of water-based pigment dispersion

Test 2 (Evaluation of Optical Density)

The respective water-based inks were applied onto a polyester film "LUMIRROR T60" (tradename) having a thickness of 75 μm available from Toray Industries Inc., using a bar coater No. 4 available from AS ONE Corporation, and heated at 60°C for 10 minutes. Next, the thus applied polyester film was allowed to stand at 25°C for 24 hours, and then the resulting printed material (5.1 cm x 8.0 cm) was subjected to measurement of optical density at total 5 points including a center and four corners thereof using a Macbeth densitometer "product number: SpectroEye" available from GretagMacbeth AG, to determine an average value of the five measured optical density values. The larger the average value becomes, the more excellent the optical density of the water-based ink is.

Test 3 (Evaluation of Adhesion Properties)

A cellophane tape having a size of 18 mm in width x 4 cm available from Nichiban Co., Ltd., was attached onto a coating film of the ink formed on the printed material obtained in the aforementioned "Evaluation of Optical Density", followed by allowing the printed material to stand for 1 minute. Then, the cellophane tape was peeled off from the coating film by pulling the tape in the direction perpendicular to the surface of the coating film, and then the condition of the coating film after peeling off the tape was visually observed to measure a peeled area of the coating film. The ratio of the thus measured peeled area of the coating film on the basis of 100% of the peeled area in the case where a whole surface portion of the coating film was peeled off was determined to evaluate adhesion properties of the water-based ink according to the following evaluation ratings. When the evaluation rating was 2, 3 or 4, the water-based ink was regarded as being excellent in adhesion properties.

(Evaluation Ratings)

4: No peel of the coating film occurred;
3: Peeled area of the coating film was less than 20%;
2: Peeled area of the coating film was not less than 20% and less than 40%; and
1: Peeled area of the coating film was not less than 40%.

TABLE 1-1

| | | | Examples | | | | | | | Com. Ex. |
|---|---|---|---|---|---|---|---|---|---|---|
| | | | 1 | 2 | 3 | 4 | 5 | 6 | 7 | 1 |
| Water-based pigment dispersion | Kind | | D-1 | D-2 | D-3 | D-4 | D-5 | D-6 | D-7 | D-C1 |
| | (Meth) acrylic resin (A) | Kind | A-1 | A-1 | A-1 | A-1 | A-1 | A-2 | A-2 | A-1 |
| | | Acid value (mgKOH/g) | 234 | 234 | 234 | 234 | 234 | 98 | 98 | 234 |
| | Polyurethane resin (B) | Kind | B-1 | B-1 | B-1 | B-1 | B-1 | B-1 | B-2 | B-1 |
| | | Resin structure | *Pc | *Pc | *Pc | *Pc | *Pc | *Pc | *Pe | *Pc |
| | Mass ratio [resin (B)/resin (A)]*1 | | 5.5 | 3.1 | 1.7 | 1.5 | 0.5 | 3.2 | 3.2 | 0.2 |
| | Crosslinking agent (C) | | EX-321L | EX-321L | EX-321L | EX-321L | EX-321L | EX-321L | EX-321L | EX-321L |
| | Crosslinking degree | | 0.24 | 0.24 | 0.24 | 0.24 | 0.24 | 0.24 | 0.24 | 0.24 |
| | Mass ratio [pigment/whole solid components of dispersion]*2 | | 0.3 | 0.4 | 0.5 | 0.6 | 0.7 | 0.4 | 0.4 | 0.8 |
| Note: *Pc: Polycarbonate-based resin structure; *Pe: Polyester-based resin structure | | | | | | | | | | |

TABLE 1-2

| | | | Examples | | | | | | | Com. Ex. |
|---|---|---|---|---|---|---|---|---|---|---|
| | | | 1 | 2 | 3 | 4 | 5 | 6 | 7 | 1 |
| Ink No. | | | 1 | 2 | 3 | 4 | 5 | 6 | 7 | C1 |
| Composition of ink formulated | Water-based pigment dispersion | Pigment | 4.0 | 4.0 | 4.0 | 4.0 | 4.0 | 4.0 | 4.0 | 4.0 |
| | | Polymer dispersant | 9.3 | 6.0 | 4.0 | 2.7 | 1.7 | 5.9 | 5.9 | 1.0 |
| | Propylene glycol | | 10.0 | 10.0 | 10.0 | 10.0 | 10.0 | 10.0 | 10.0 | 10.0 |
| | Surfactant "KF-6011" | | 1.0 | 1.0 | 1.0 | 1.0 | 1.0 | 1.0 | 1.0 | 1.0 |
| | Emulsion of polyurethane resin (active ingredient content) | | - | - | - | - | - | - | - | - |
| | Ion-exchanged water | | 75.7 | 79.0 | 81.0 | 82.3 | 83.3 | 79.1 | 79.1 | 84.0 |
| Mass ratio [pigment/whole solid components of ink]*3 | | | 0.3 | 0.4 | 0.5 | 0.6 | 0.7 | 0.4 | 0.4 | 0.8 |
| Evaluation | Storage stability*4 | | 15 | 0 | 3 | 4 | 15 | 1 | 0 | 23 |
| | Optical density | | 1.76 | 1.80 | 1.80 | 1.76 | 1.71 | 1.78 | 1.80 | 1.56 |
| | Adhesion properties | | 4 | 4 | 4 | 3 | 3 | 4 | 4 | 2 |

TABLE 2-1

| | | | Examples | | | | | Comparative Examples | |
|---|---|---|---|---|---|---|---|---|---|
| | | | 2 | 8 | 9 | 10 | 11 | 2 | 3 |
| Water-based pigment dispersion | Kind | | D-2 | D-8 | D-9 | D-10 | D-11 | D-C2 | D-C3 |
| | (Meth) acrylic resin (A) | Kind | A-1 | A-1 | A-1 | A-1 | A-1 | A-1 | A-1 |
| | | Acid value [mgKOH/g] | 234 | 234 | 234 | 234 | 234 | 234 | 234 |
| | Polyurethane resin (B) | Kind | B-1 | B-1 | B-1 | B-1 | B-1 | B-1 | B-1 |
| | | Resin structure | *Pc | *Pc | *Pc | *Pc | *Pc | *Pc | *Pc |
| | Mass ratio [resin (B)/resin (A)]*1 | | 3.1 | 3.1 | 3.1 | 3.1 | 3.1 | 3.1 | 3.1 |
| | Crosslin king agent (C) | | EX-321L | EX-212 | EX-321L | EX-321L | EX-321L | EX-321L | EX-321L |
| | Crosslin king degree | | 0.24 | 0.24 | 0.15 | 0.36 | 0.50 | 0.08 | 0.70 |
| | Mass ratio [pigment/whole solid components of dispersion]*2 | | 0.4 | 0.4 | 0.4 | 0.4 | 0.4 | 0.4 | 0.4 |
| Note: *Pc: Polycarbonate-based resin structure | | | | | | | | | |

TABLE 2-2

| | | | Examples | | | | | Comparative Examples | |
|---|---|---|---|---|---|---|---|---|---|
| | | | 2 | 8 | 9 | 10 | 11 | 2 | 3 |
| Ink No. | | | 2 | 8 | 9 | 10 | 11 | C2 | C3 |
| Composition of ink formulated | Water-based pigment dispersion | Pigment | 4.0 | 4.0 | 4.0 | 4.0 | 4.0 | 4.0 | 4.0 |
| | | Polymer dispersant | 6.0 | 6.1 | 6.0 | 6.1 | 6.2 | 5.9 | 6.4 |
| | Propylene glycol | | 10.0 | 10.0 | 10.0 | 10.0 | 10.0 | 10.0 | 10.0 |
| | Surfactant "KF-6011" | | 1.0 | 1.0 | 1.0 | 1.0 | 1.0 | 1.0 | 1.0 |
| | Emulsion of polyurethane resin (active ingredient content) | | - | - | - | - | - | - | - |
| | Ion-exchanged water | | 79.0 | 78.9 | 79.0 | 78.9 | 78.8 | 79.1 | 78.6 |
| Mass ratio [pigment/whole solid components of ink] *3 | | | 0.4 | 0.4 | 0.4 | 0.4 | 0.4 | 0.4 | 0.4 |
| Evaluation | Storage stability*4 | | 0 | 14 | 6 | 3 | 2 | 26 | 21 |
| | Optical density | | 1.80 | 1.56 | 1.78 | 1.77 | 1.77 | 1.51 | 1.50 |
| | Adhesion properties | | 4 | 4 | 4 | 3 | 3 | 4 | 2 |

TABLE 3-1

| | | | Examples | | | Comparative Examples | | |
|---|---|---|---|---|---|---|---|---|
| | | | 2 | 12 | 13 | 4 | 5 | 6 |
| Water-based pigment dispersion | Kind | | D-2 | D-2 | D-5 | D-C4 | D-C5 | D-C5 |
| | (Meth) acrylic resin (A) | Kind | A-1 | A-1 | A-1 | A-1 | A-1 | A-1 |
| | | Acid value [mgKOH/g] | 234 | 234 | 234 | 234 | 234 | 234 |
| | Polyurethane resin (B) | Kind | B-1 | B-1 | B-1 | - | - | - |
| | | Resin structure | *Pc | *Pc | *Pc | - | - | - |
| | Mass ratio [resin (B)/resin (A)]*1 | | 3.1 | 3.1 | 0.5 | - | - | - |
| | Crosslin king agent (C) | | EX-321L | EX-321L | EX-321L | EX-321L | EX-321L | EX-321L |
| | Crosslin king degree | | 0.24 | 0.24 | 0.24 | 0.24 | 0.24 | 0.24 |
| | Mass ratio [pigment/whole solid components of dispersion]*2 | | 0.4 | 0.4 | 0.7 | 0.4 | 0.7 | 0.7 |
| Note: *Pc: Polycarbonate-based resin structure | | | | | | | | |

TABLE 3-2

| | | | Examples | | | Comparative Examples | | |
|---|---|---|---|---|---|---|---|---|
| | | | 2 | 12 | 13 | 4 | 5 | 6 |
| Ink No. | | | 2 | 12 | 13 | C4 | C5 | C6 |
| Composition of ink formulated | Water-based pigment dispersion | Pigment | 4.0 | 4.0 | 4.0 | 4.0 | 4.0 | 4.0 |
| | | Polymer dispersant | 6.0 | 6.0 | 1.7 | 6.3 | 1.8 | 1.8 |
| | Propylene glycol | | 10.0 | 10.0 | 10.0 | 10.0 | 10.0 | 10.0 |
| | Surfactant "KF-6011" | | 1.0 | 1.0 | 1.0 | 1.0 | 1.0 | 1.0 |
| | Emulsion of polyurethane resin (active ingredient content) | | - | 4.3 | 4.3 | - | - | 4.3 |
| | Ion-exchanged water | | 79.0 | 74.7 | 79.0 | 78.7 | 83.2 | 78.9 |
| Mass ratio [pigment/whole solid components of ink] *3 | | | 0.4 | 0.3 | 0.4 | 0.4 | 0.7 | 0.4 |
| Evaluation | Storage stability*4 | | 0 | 0 | 15 | 3 | 4 | 8 |
| | Optical density | | 1.80 | 1.79 | 1.79 | 1.80 | 1.67 | 1.31 |
| | Adhesion properties | | 4 | 4 | 4 | 1 | 1 | 4 |

As shown in Tables 1 to 3, it was confirmed that in Examples 1 to 13, since the respective polymer dispersants used therein contained the (meth)acrylic resin (A) and the polyurethane resin (B) in which the crosslinking degree was in the range of not less than 0.12 and not more than 0.65 and the mass ratio of the pigment to whole solid components of the respective water-based pigment dispersions [pigment/(whole solid components of water-based pigment dispersion)] was in the range of not less than 0.25 and not more than 0.75, the resulting water-based pigment dispersions were excellent in storage stability, and the resulting water-based inks were capable of satisfying both of excellent adhesion

properties and high optical density.

On the other hand, it was confirmed that in Comparative Example 1, since the mass ratio of the pigment to whole solid components of the water-based pigment dispersion [pigment/(whole solid components of water-based pigment dispersion)] was 0.8, the resulting water-based pigment dispersion as well as water-based ink were respectively deteriorated in storage stability as well as adhesion properties and optical density, as compared to those of Examples 1 to 13. Also, it was confirmed that in Comparative Example 2, since the crosslinking degree was 0.08, the resulting water-based pigment dispersion as well as water-based ink were respectively deteriorated in storage stability as well as optical density, as compared to those of Examples 1 to 13; and in Comparative Example 3, since the crosslinking degree was 0.70, the resulting water-based pigment dispersion as well as water-based ink were respectively deteriorated in storage stability as well as adhesion properties and optical density, as compared to those of Examples 1 to 13. It was also confirmed that in Comparative Example 4, since no polyurethane resin (B) was contained as the polymer dispersant, the resulting water-based ink was deteriorated in adhesion properties despite of a large amount of the resins contained in the dispersion system, and it was therefore recognized that the polymer dispersant containing the polyurethane resin (B) was effective to achieve good adhesion properties of the ink. It was also confirmed that in Comparative Example 5, since no polyurethane resin (B) was contained as the polymer dispersant, notwithstanding that the crosslinking degree fell within the range of not less than 0.12 and not more than 0.65 and the mass ratio of the pigment to whole solid components of the water-based pigment dispersion [pigment/(whole solid components of water-based pigment dispersion)] fell within the range of not less than 0.25 and not more than 0.75, the resulting water-based ink was deteriorated in adhesion properties. It was further confirmed that in Comparative Example 6 in which no polyurethane resin (B) was contained as the polymer dispersant and the emulsion of the polyurethane resin was compounded instead upon preparation of the ink, the resulting water-based ink was deteriorated in optical density despite of exhibiting adhesion properties, and therefore failed to satisfy both of excellent adhesion properties and high optical density.

Industrial Applicability

In accordance with the present invention, it is possible to provide a water-based pigment dispersion that is excellent in storage stability, and is capable of exhibiting high optical density while maintaining excellent adhesion properties to a non-water adsorbing printing medium when used in a water-based ink, a water-based ink containing the water-based pigment dispersion, and a process for producing the water-based pigment dispersion.

## Claims

1. A water-based pigment dispersion formed by dispersing a pigment in a water-based medium with a polymer dispersant, in which:

    the polymer dispersant comprises an acid group-containing (meth)acrylic resin (A) and a polyurethane resin (B);
    the (meth)acrylic resin (A) is crosslinked with a crosslinking agent (C), and a crosslinking degree of the (meth)acrylic resin (A) which is defined by a ratio of a mole equivalent number of crosslinkable functional groups of the crosslinking agent (C) to a mole equivalent number of acid groups of the (meth)acrylic resin (A) [(mole equivalent number of crosslinkable functional groups of crosslinking agent (C))/(mole equivalent number of acid groups of (meth)acrylic resin (A))] is not less than 0.12 and not more than 0.65; and
    a mass ratio of the pigment to whole solid components of the water-based pigment dispersion [pigment/(whole solid components of water-based pigment dispersion)] is not less than 0.25 and not more than 0.75.

2. The water-based pigment dispersion according to claim 1, wherein an acid value of the (meth)acrylic resin (A) is not less than 50 mgKOH/g and not more than 300 mgKOH/g.

3. The water-based pigment dispersion according to claim 1 or 2, wherein the polyurethane resin (B) comprises acid groups.

4. The water-based pigment dispersion according to any one of claims 1 to 3, wherein an acid value of the polyurethane resin (B) is not less than 5 mgKOH/g and not more than 50 mgKOH/g.

5. The water-based pigment dispersion according to claim 3 or 4, wherein the (meth)acrylic resin (A) and the polyurethane resin (B) are crosslinked with the crosslinking agent (C).

6. The water-based pigment dispersion according to any one of claims 1 to 5, wherein the crosslinking agent (C) is a

polyglycidyl ether compound of a polyhydric alcohol comprising a hydrocarbon group comprising not less than 3 and not more than 8 carbon atoms.

**7.** The water-based pigment dispersion according to any one of claims 1 to 6, wherein a mass ratio of the polyurethane resin (B) to the (meth)acrylic resin (A) [polyurethane resin (B)/(meth)acrylic resin (A)] in the water-based pigment dispersion is not less than 0.15 and not more than 15.

**8.** A water-based ink comprising the water-based pigment dispersion according to any one of claims 1 to 7.

**9.** The water-based ink according to claim 8, wherein a total content of the pigment and the polymer dispersant in the water-based ink is not less than 2% by mass and not more than 20% by mass.

**10.** The water-based ink according to claim 8 or 9, wherein a mass ratio of the pigment to whole solid components of the water-based ink [pigment/whole solid components of water-based ink] is not less than 0.25 and not more than 0.75.

**11.** A use of the water-based ink according to any one of claims 8 to 10 for inkjet printing.

**12.** A process for producing a water-based pigment dispersion, comprising the following steps 1 and 2:

Step 1: subjecting a pigment mixture comprising a pigment, an acid group-containing (meth)acrylic resin (A) and a polyurethane resin (B) to dispersion treatment to obtain a dispersion; and
Step 2: subjecting the dispersion obtained in the step 1 to crosslinking treatment with a crosslinking agent (C).

**13.** The process for producing a water-based pigment dispersion according to claim 12, further comprising the following steps 1-1 and 1-2 to be conducted before the step 1:

Step 1-1: dispersing the pigment with the acid group-containing (meth)acrylic resin (A) to obtain a preliminary dispersion; and
Step 1-2: adding an emulsion of the polyurethane resin (B) to the preliminary dispersion obtained in the step 1-1 to obtain the pigment mixture comprising the pigment, the acid group-containing (meth)acrylic resin (A) and the polyurethane resin (B).

**14.** The process for producing a water-based pigment dispersion according to claim 12 or 13, wherein an amount of the crosslinking agent (C) used in the step 2 is controlled such that a ratio of a mole equivalent number of crosslinkable functional groups of the crosslinking agent (C) to a mole equivalent number of acid groups of the (meth)acrylic resin (A) is not less than 0.12 and not more than 0.65.

**15.** The process for producing a water-based pigment dispersion according to any one of claims 12 to 14, wherein a mass ratio of the polyurethane resin (B) to the (meth)acrylic resin (A) [polyurethane resin (B)/(meth)acrylic resin (A)] in the pigment mixture in the step 1 is not less than 0.15 and not more than 15.

## INTERNATIONAL SEARCH REPORT

International application No.
PCT/JP2018/048535

A. CLASSIFICATION OF SUBJECT MATTER
Int.Cl. C09D17/00(2006.01)i, B41M5/00(2006.01)i, C09B67/46(2006.01)i, C09D11/326(2014.01)n

According to International Patent Classification (IPC) or to both national classification and IPC

B. FIELDS SEARCHED
Minimum documentation searched (classification system followed by classification symbols)
Int.Cl. C09D17/00, B41M5/00, C09B67/46, C09D11/326

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2004/092285 A1 (SEIKO EPSON CORPORATION) 28 October 2004, claims, page 2, lines 3-8, page 3, line 23 to page 11, line 23, page 17, line 23 to page 18, line 19, examples & US 2005/0228069 A1, claims, paragraphs [0004], [0018]-[0060], [0102]-[0107], examples & EP 1614721 A1 & CN 1697861 A | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29.03.2019 | 09.04.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/048535

C (Continuation). DOCUMENTS CONSIDERED TO BE RELEVANT

| Category* | Citation of document, with indication, where appropriate, of the relevant passages | Relevant to claim No. |
|---|---|---|
| X | WO 2003/097753 A1 (SEIKO EPSON CORPORATION) 27 November 2003, claims, page 4, line 1 to page 12, line 3, page 16, line 15 to page 17, line 20, examples & US 2004/0242726 A1, claims, paragraphs [0025]-[0067], [0095]-[0101], examples & EP 1505128 A1 & JP 4157868 B2 | 1-15 |
| X | JP 2006-070123 A (SEIKO EPSON CORPORATION) 16 March 2006, claims, paragraphs [0006], [0017]-[0031], [0043]-[0053], examples & US 2006/0235108 A1, claims, paragraphs [0008], [0050]-[0129], examples | 1-15 |
| X | WO 2016/181797 A1 (KAO CORPORATION) 17 November 2016, claims, paragraphs [0007], [0013], [0014], [0033]-[0036], [0046]-[0064], examples & US 2018/0142110 A1, claims, paragraphs [0016], [0017], [0036]-[0043], [0112]-[0125], [0150]-[0205], examples & EP 3275949 A1 & CN 107532025 A & JP 2016-210959 A | 1-4, 6-11 |
| A | JP 2005-048016 A (SEIKO EPSON CORPORATION) 24 February 2005, entire text (Family: none) | 1-15 |
| A | JP 2017-501287 A (E. I. DU PONT DE NEMOURS AND COMPANY) 12 January 2017, entire text & US 2017/0190929 A1, entire text & WO 2015/065796 A1 & EP 3063238 A1 & KR 10-2016-0081910 A | 1-15 |
| A | JP 2016-520670 A (FUJIFILM IMAGING COLORANTS, INC.) 14 July 2016, entire text & US 2016/0032119 A1, entire text & WO 2014/147374 A1 & EP 2976393 A1 & KR 10-2015-0133763 A & CN 105339440 A | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004131586 A
- JP 2013053200 A
- JP 2005048016 A
- WO 2009066577 A